(19) Europäisches Patentamt
European Patent Office
Office européen des brevets

(11) EP 2 705 621 B1

(12) **EUROPEAN PATENT SPECIFICATION**

(45) Date of publication and mention of the grant of the patent:
**02.05.2018 Bulletin 2018/18**

(21) Application number: **12782092.6**

(22) Date of filing: **07.05.2012**

(51) Int Cl.:
***H04W 74/08** (2009.01)* ***H04W 56/00** (2009.01)*
*H04W 72/12 (2009.01)*

(86) International application number:
**PCT/KR2012/003566**

(87) International publication number:
**WO 2012/153960 (15.11.2012 Gazette 2012/46)**

(54) **METHODS AND APPARATUS FOR RANDOM ACCESS PROCEDURES WITH CARRIER AGGREGATION FOR LTE-ADVANCED SYSTEMS**

VERFAHREN UND VORRICHTUNG FÜR DIREKTZUGRIFFSVERFAHREN MIT TRÄGERAGGREGATION FÜR ERWEITERTE LTE-SYSTEME

PROCÉDÉS ET APPAREILS POUR PROCÉDURES D'ACCÈS ALÉATOIRE AVEC AGRÉGATION DE PORTEUSES POUR SYSTÈMES LTE AVANCÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**06.05.2011 US 201161483516 P**
**26.07.2011 US 201161511927 P**
**23.09.2011 US 201161538717 P**
**14.03.2012 US 201261610904 P**
**02.05.2012 US 201213462401**

(43) Date of publication of application:
**12.03.2014 Bulletin 2014/11**

(73) Proprietor: **Samsung Electronics Co., Ltd.**
**Suwon-si, Gyeonggi-do 443-742 (KR)**

(72) Inventors:
- **NG, Boon Loong**
  **Richardson**
  **TX 75082 (US)**
- **VAN LIESHOUT, Gerardus Johannes Petrus**
  **NL-7314CG Apeldoorn (NL)**
- **ZHANG, Jianzhong**
  **Plano**
  **TX 75093 (US)**
- **JEONG, Kyeong-In**
  **Suwon-si**
  **Gyunnggi-do 443-380 (KR)**
- **KIM, Soeng-Hun**
  **Youngin-si**
  **Gyunggi-do 446-908 (KR)**
- **NAM, Young-Han**
  **Richardson**
  **TX 75080 (US)**

(74) Representative: **Nederlandsch Octrooibureau**
**P.O. Box 29720**
**2502 LS The Hague (NL)**

(56) References cited:
**KR-A- 20090 094 743** **KR-A- 20100 124 677**
**KR-A- 20110 020 170** **US-A1- 2011 019 619**
**US-A1- 2011 103 332**

- **FUJITSU: "PDCCH order and RA selection", 3GPP DRAFT; R2-103083, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 4 May 2010 (2010-05-04), XP050423248, [retrieved on 2010-05-04]**
- **HUAWEI ET AL: "Miscellaneous corrections to TS36.321 on CA", 3GPP DRAFT; R2-105599, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 4 October 2010 (2010-10-04), XP050452505, [retrieved on 2010-10-04]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 705 621 B1

- FUJITSU: "CIF inclusion in PDCCH order", 3GPP DRAFT; R2-103849, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451255, [retrieved on 2010-06-22]
- CHO, B.-Y ET AL. 3G EVOLUTION: LTE FOR MOBILE BROADBAND. 10 April 2010, XP008173364

## Description

### Technical Field

The present application relates generally to wireless communication systems and, more specifically, to methods for random access with cross-carrier scheduling in an LTE-Advanced system.

### Background Art

One of the objectives of Release 11 of the 3GPP Long Term Evolution (LTE) standard is to specify the support for the use of multiple timing advances for LTE uplink carrier aggregation. This is discussed in LTE Document No. RP-101421, titled "LTE Carrier Aggregation Enhancements". A timing advance for uplink transmission is performed by the user equipment (UE) to achieve uplink timing synchronization with the network. The support for multiple timing advances for LTE uplink carrier aggregation is necessary for cellular deployment scenarios where two aggregated cells can undergo different channel propagation delay from the UE.

"FUJITSU: "PDCCH order and RA selection", 3GPP DRAFT; R2-103083, 3RD GENERATION PARTNERSHIP PROJECT (3GPP), MOBILE COMPETENCE CENTRE ; 650, ROUTE DES LUCIOLES ; F-06921 SOPHIA-ANTI POLIS CEDEX ; FRANCE, vol. RAN WG2, no. Montreal, Canada; 20100510, 4 May 2010" relates to PDCCH order and RA selection wherein an eNB is able to indicate an UL SCO where the PRACH resource is immediately available for delay reduction.

HUAWEI ET AL: "Miscellaneous corrections to TS36.321 on CA", 3GPP DRAFT; R2-105599, 3RD GENERATION PARTNERSHIP PROJECT (3GPP), MOBILE COMPETENCE CENTRE ; 650, ROUTE DES LUCIOLES ; F-06921 SOPHIA-ANTI POLIS CEDEX ; FRANCE, vol. RAN WG2, no. Xi'an; 20101011, 4 October 2010 (2010-10-04) discloses a Random Access procedure initiated by a PDCCH order or by the MAC sublayer itself. If a UE receives a PDCCH transmission consistent with a PDCCH order [5] masked with its C-RNTI, it shall initiate a Random Access procedure.

FUJITSU: "CIF inclusion in PDCCH order", 3GPP DRAFT; R2-103849, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22) discloses that a CIF is included in a PDCCH order (DCI format 1A) and the field should be reserved.

US 2011/019619 discloses a method for handling physical downlink control channel (PDCCH) orders in a user equipment (UE) of a wireless communication system is disclosed. The wireless communication system supports Carrier Aggregation, which enables the UE to perform transmission and/or reception through multiple carriers. The method includes steps of configuring a plurality of carriers, receiving a PDCCH order, and using a specific carrier within the plurality of carriers to trigger a random access procedure according to the PDCCH order.

US 2011/103332 relates to access procedure for carrier aggregation in a wireless communication system. The method includes sending a dedicated radio resource control signal to configure a user equipment with a plurality of secondary component carriers (SCCs) that include uplink SCCs and/or downlink SCCs for carrier aggregation. The method further includes sending an activation signal to the user equipment to activate a configured downlink SCC. The method also includes transmitting a physical downlink control channel order only on the downlink primary CC to trigger a random access procedure.

### Disclosure of Invention

### Solution to Problem

The invention is defined in the appended independent claims. Embodiments representing particular realisations are defined in the dependent claims.

For use in an eNodeB, a method for a random access procedure in an LTE-Advanced system is provided. The method includes receiving from a user equipment a random access preamble message on a physical random access channel (PRACH) on a first cell, the PRACH associated with a random access radio network temporary identifier (RA-RNTI). The method also includes transmitting to the user equipment a random access response (RAR) message on a second cell. At least one of the RAR message and the RA-RNTI comprises information configured to allow the user equipment to identify a target Timing Advance Group (TAG) or cell associated with the RAR message.

An eNodeB configured for a random access procedure is also provided. The eNodeB includes a controller configured to receive from a user equipment a random access preamble message on a PRACH on a first cell, the PRACH associated with a RARNTI. The controller is also configured to transmit to the user equipment a RAR message on a second cell. At least one of the RAR message and the RA-RNTI comprises information configured to allow the user equipment to identify a target TAG or cell associated with the RAR message.

A user equipment configured for a random access procedure is also provided. The user equipment includes a processor configured to transmit to an eNodeB a random access preamble message on a PRACH on a first cell, the PRACH associated with a RA-RNTI. The processor is also configured to receive from the eNodeB a RAR message on a second cell. At least one of the RAR message and the RA-RNTI comprises information configured to allow the user equipment to identify a target TAG or cell associated with the RAR message

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**Brief Description of Drawings**

For a more complete understanding of the present disclosure and its advantages, reference is now made to the following description taken in conjunction with the accompanying drawings, in which like reference numerals represent like parts:

FIGURE 1 illustrates an exemplary wireless network according to one embodiment of the present disclosure;

FIGURE 2 illustrates an eNodeB in greater detail according to one embodiment of this disclosure;

FIGURE 3 illustrates a user equipment in greater detail according to one embodiment of this disclosure;

FIGURE 4 illustrates a network of primary and secondary cells according to one embodiment of this disclosure;

FIGURES 5A and 5B illustrate contention-based and non-contention-based random access procedures in a LTE system;

FIGURES 5C through 5F illustrate other contention-based and non-contention-based random access procedures, according to embodiments of this disclosure;

FIGURES 6A and 6B illustrate problems of differentiating a target Timing Advance Group (TAG) or cell for a physical downlink control channel order when cross-carrier scheduling is configured, and problems of potential ambiguity of the target UE for the random access response sent by the eNode;

FIGURES 7A and 7B illustrate scenarios where a common search space is not defined on the secondary cell;

FIGURES 8A and 8B illustrate new PDCCH orders that includes a TAG indicator field (TIF) or carrier indicator field (CIF), according to embodiments of this disclosure;

FIGURE 9 illustrates distinct random access channel (RACH) resources assigned to each distinct combination of UE and TAG/cell, according to an embodiment of this disclosure;

FIGURE 10 illustrates distinct RACH resources assigned to a distinct UE per TAG/ cell, according to embodiments of this disclosure;

FIGURE 11 illustrates a new information element CrossCarrierSchedulingConfig, according to one embodiment of this disclosure;

FIGURE 12 illustrates an example of a MAC random access response (RAR) with a TAG/carrier indicator field (TIF/CIF), according to one embodiment of this disclosure;

FIGURES 13A and 13B illustrate two MAC RARs with TIF/CIF and corresponding subheaders seen by a new UE and a legacy UE, respectively, according to one embodiment of this disclosure;

FIGURE 14 illustrates a LTE release 10 MAC subheader with backoff indicator, according to one embodiment of this disclosure;

FIGURE 15 illustrates a MAC subheader with backoff indicator and TIF/CIF, according to one embodiment of this disclosure;

FIGURE 16 illustrates a MAC RAR with TIF/CIF implicitly indicated by location, according to one embodiment of this disclosure;

FIGURE 17 illustrates an example design for a MAC subheader with random access preamble identifier (RAPID) and TIF/CIF, according to one embodiment of this disclosure;

FIGURE 18 illustrates a MAC subheader that indicates TIF/CIF is included in the MAC header, according to one embodiment of this disclosure;

FIGURE 19 illustrates a TIF/CIF subheader design, according to one embodiment of this disclosure;

FIGURE 20 illustrates RACH resources assigned to a UE and TAG/cell, according to one embodiment of this disclosure;

FIGURE 21 illustrates RACH resources selected by UEs in a TAG/cell, according to one embodiment of this disclosure;

FIGURE 22 illustrates a contention scenario according to one embodiment of this disclosure;

FIGURE 23 illustrates orthogonal RACH resources between two TAGs/cells, according to one embodiment of this disclosure; and

FIGURE 24 illustrates a method for achieving orthogonality of RACH resources between two TAGs/cells.

**Best Mode for Carrying out the Invention**

FIGURES 1 through 24, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

The following documents and standards descriptions are referred to in the present disclosure as: (i) ETE Document No. RP-101421, "ETE Carrier Aggregation Enhancements" (hereinafter "REF1"); (ii) Document No. R2-111840, "Initial Consideration on Multiple TA, CATT" (hereinafter "REF2"); (iii) 3GPP Technical Specification No. 36.300, version 10.3.0, March 2011 (hereinafter "REF3"); (iv) 3GPP Technical Report No. 36.814, version 9.0.0, March 2010 (hereinafter "REF4"); (v) 3GPP Technical Specification No. 36.321, version 10.2.0, June 2011 (hereinafter "REF5"); (vi) 3GPP Technical Specification No. 36.331, version 10.2.0, June 2011 (hereinafter "REF6"); (vii) 3GPP Technical Specification No. 36.212, version 10.2.0, June 2011 (hereinafter "REF7"); (viii) 3GPP Technical Specification No. 36.213, version 10.2.0, June 2011 (hereinafter "REF8").

FIGURE 1 illustrates an exemplary wireless network 100 according to one embodiment of the present disclosure. The embodiment of wireless network 100 illustrated in FIGURE 1 is for illustration only. Other embodiments of wireless network 100 could be used without departing from the scope of this disclosure.

In the illustrated embodiment, wireless network 100 includes eNodeB (eNB) 101, eNB 102, and eNB 103. The eNB 101 communicates with eNB 102 and eNB 103. The eNB 101 also communicates with Internet protocol (IP) network 130, such as the Internet, a proprietary IP network, or other data network.

Depending on the network type, other well-known terms may be used instead of "eNodeB," such as "base station" or "access point". For the sake of convenience, the term "eNodeB" shall be used herein to refer to the network infrastructure components that provide wireless access to remote terminals

The eNB 102 provides wireless broadband access to network 130 to a first plurality of user equipments (UEs) within coverage area 120 of eNB 102. The first plurality of UEs includes UE 111, which may be located in a small business; UE 112, which may be located in an enterprise; UE 113, which may be located in a WiFi hotspot; UE 114, which may be located in a first residence; UE 115, which may be located in a second residence; and UE 116, which may be a mobile device, such as a cell phone, a wireless laptop, a wireless PDA, or the like. UEs 111-116 may be any wireless communication device, such as, but not limited to, a mobile phone, mobile PDA and any mobile station (MS).

For the sake of convenience, the term "user equipment" or "UE" is used herein to designate any remote wireless equipment that wirelessly accesses an eNB, whether the UE is a mobile device (e.g., cell phone) or is normally considered a stationary device (e.g., desktop personal computer, vending machine, etc.). In other systems, other well-known terms may be used instead of "user equipment", such as "mobile station (MS)", "subscriber station (SS)", "remote terminal (RT)", "wireless terminal (WT)", and the like.

The eNB 103 provides wireless broadband access to a second plurality of UEs within coverage area 125 of eNB 103. The second plurality of UEs includes UE 115 and UE 116. In somes embodiment, eNBs 101-103 may communicate with each other and with UEs 111-116 using LTE or LTE-A techniques.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

Although FIGURE 1 depicts one example of a wireless network 100, various changes may be made to FIGURE 1. For example, another type of data network, such as a wired network, may be substituted for wireless network 100. In a wired network, network terminals may replace eNBs 101-103 and UEs 111-116. Wired connections may replace the wireless connections depicted in FIGURE 1.

FIGURE 2 illustrates an eNB in greater detail according to one embodiment of this disclosure. In certain embodiments, eNB 200 may represent any of the eNBs 101-103 shown in FIGURE 1. The embodiment of eNB 200 illustrated in FIGURE 2 is for illustration only. Other embodiments of eNB 200 could be used without departing from the scope of this disclosure.

The eNB 200 comprises a controller 225, a channel controller 235, a transceiver interface (IF) 245, an RF transceiver unit 250, and an antenna array 255. Channel controller 235 comprises a plurality of channel elements including an exemplary channel element 240. The eNB 200 also comprises a handoff controller 260 and a memory 270.

Controller 225 comprises processing circuitry and memory capable of executing an operating program that controls the overall operation of eNB 200. Under normal conditions, controller 225 directs the operation of channel controller 235, which contains a number of channel elements including channel element 240 that perform bidirectional communications in the forward channels and the reverse channels.

The embodiment of RF transceiver unit 250 as a single device is for illustration only. RF transceiver unit 250 may include separate transmitter and receiver devices without departing from the scope of this disclosure. RF transceiver unit 250 includes elements configured to process transmitted and/or received signals, including power amplifier (PA) 252.

Antenna array 255 transmits forward channel signals received from RF transceiver unit 250 to mobile stations in the coverage area of eNB 200. Antenna array 255 also sends to transceiver 250 reverse channel signals received from UEs in the coverage area of eNB 200. In some embodiments of this disclosure, antenna array 255 is a multi-sector antenna, such as a three-sector antenna in which each antenna sector is responsible for transmitting and receiving in a 120° arc of coverage area. Additionally, RF transceiver 250 may contain an antenna selection unit to select among different antennas in antenna array 255 during transmit and receive operations.

FIGURE 3 illustrates a UE in greater detail according to one embodiment of this disclosure. In certain embodiments, UE 300 may represent any of the UEs 111-116 shown in FIGURE 1. The embodiment of UE 300 illustrated in FIGURE 3 is for illustration only. Other embodiments of UE 300 could be used without departing from the scope of this disclosure.

UE 300 comprises antenna 305, radio frequency (RF) transceiver 310, transmit (TX) processing circuitry 315, microphone 320, and receive (RX) processing circuitry 325. UE 300 also comprises speaker 330, main processor 340, input/output (I/O) interface (IF) 345, keypad 350, display 355, memory 360, power manager 370, and battery 380.

Radio frequency (RF) transceiver 310 receives from antenna 305 an incoming RF signal transmitted by an eNB of wireless network 100. Radio frequency (RF) transceiver 310 down-converts the incoming RF signal to produce an intermediate frequency (IF) or a baseband signal. The IF or baseband signal is sent to receiver (RX) processing circuitry 325 that produces a processed baseband signal by filtering, decoding, and/or digitizing the baseband or IF signal. Receiver (RX) processing circuitry 325 transmits the processed baseband signal to speaker 330 (i.e., voice data) or to main processor 340 for further processing (e.g., web browsing).

Transmitter (TX) processing circuitry 315 receives analog or digital voice data from microphone 320 or other outgoing baseband data (e.g., web data, e-mail, interactive video game data) from main processor 340. Transmitter (TX) processing circuitry 315 encodes, multiplexes, and/or digitizes the outgoing baseband data to produce a processed baseband or IF signal. Radio frequency (RF) transceiver 310 receives the outgoing processed baseband or IF signal from transmitter (TX) processing circuitry 315. Radio frequency (RF) transceiver 310 up-converts the baseband or IF signal to a radio frequency (RF) signal that is transmitted via antenna 305.

In some embodiments of the present disclosure, main processor 340 is a microprocessor or microcontroller. Memory 360 is coupled to main processor 340. Memory 360 can be any computer readable medium. For example, memory 360 can be any electronic, magnetic, electromagnetic, optical, electro-optical, electro-mechanical, and/ or other physical device that can contain, store, communicate, propagate, or transmit a computer program, software, firmware, or data for use by the microprocessor or other computer-related system or method. According to such embodiments, part of memory 360 comprises a random access memory (RAM) and another part of memory 360 comprises a Flash memory, which acts as a read-only memory (ROM).

Main processor 340 executes basic operating system (OS) program 361 stored in memory 360 in order to control the overall operation of UE 300. In one such operation, main processor 340 controls the reception of forward channel signals and the transmission of reverse channel signals by radio frequency (RF) transceiver 310, receiver (RX) processing circuitry 325, and transmitter (TX) processing circuitry 315, in accordance with well-known principles.

Main processor 340 is capable of executing other processes and programs resident in memory 360. Main processor 340 can move data into or out of memory 360, as required by an executing process. Main processor 340 is also coupled to power manager 370, which is further coupled to battery 380. Main processor 340 and/or power manager 370 may include software, hardware, and/or firmware capable of controlling and reducing power usage and extending the time between charges of battery 380. In certain embodiments, power manager 370 may be separate from main processor 340. In other embodiments, power manager 370 may be integrated in, or otherwise a part of, main processor 340.

Main processor 340 is also coupled to keypad 350 and display unit 355. The operator of UE 300 uses keypad 350 to enter data into UE 300. Display 355 may be a liquid crystal or light emitting diode (LED) display capable of rendering text and/or graphics from web sites. Alternate embodiments may use other types of displays.

A timing advance of uplink transmission is performed by a UE to achieve uplink timing synchronization with the network. The support of multiple timing advances for LTE uplink carrier aggregation may be needed for cellular deployment scenarios where two aggregated cells are not co-located. For example, as shown in FIGURE 4, one cell (e.g., a primary cell or PCell) can be used to provide macro coverage which is managed by a base station or eNodeB, and another cell (e.g., a secondary cell or SCell) can be used to provide local coverage within the macro coverage and is attached to a remote radio head (RRH) or a frequency selective repeater. The deployment scenarios are described in greater detail below. It has been agreed in the RAN2#73bis meeting that all deployment scenarios listed in REF2 are not precluded from the support of multiple timing advances.

One of the methods to enable multiple timing advances is to support random access procedures on the SCell, which does not share the same timing advance as the PCell. The current random access procedures for LTE are illustrated in FIGURES 5A and 5B. FIGURE 5A illustrates a contention-based random access procedure, and FIGURE 5B illustrates a non-contention based random access procedure. The steps for the random access procedures are described in Section 10.1.5 of REF3. For example, as shown in FIGURE 5A, in LTE Release 10, in a contention-based random access procedure, steps 1, 2 and 3 occur on the PCell while the contention resolution (step 4) can be cross-scheduled by the PCell (i.e., the actual DL assignment is for the SCell). As shown in FIGURE 5B, in a non-contention-based random access procedure, step 0, step 1, and 2 occur on the PCell. A complete description of the random access procedure can be found in Section 5.1 of REF5. A method to support non-contention-based random access procedures and contention-based random access procedures for the SCell is to enable random access procedure control signaling to be sent from the SCell, as shown in FIGURES 5C and 5D, respectively.

It would be beneficial to provide methods to support random access procedures for the SCell when the downlink physical control channel (PDCCH) of the SCell is suffering from excessive interference, thereby rendering the channel unreliable for signal reception at the UE. This can occur when carrier-aggregation based heterogeneous networks are deployed (see Section 9A.2.1 of REF4). In this situation, the network may need to rely on the cross-carrier scheduling feature in order to carry out a random access procedure, as shown in FIGURE 5E. In addition, if the PDCCH common search space is not defined for the SCell (as in LTE Release 10), a method to support transmission of random access response for the SCell on the PCell is needed, as shown in FIGURE 5F.

If cross-carrier scheduling is configured or if a common search space on the SCell does not exist, the following issues have to be resolved. For a non-contention-based random access procedure, the UE may be required to correctly identify and receive the random access channel (RACH) messages intended for the UE (i.e., messages 0, 2), with the correct target cell, or the target Timing Advance Group (TAG) (defined as the group of cells that share the same timing advance) of the random access procedure. For a contention-based random access procedure, there may be other UEs performing random access at the same time. Contention resolution support for a cross-carrier random access procedure may be required.

Embodiments of this disclosure resolve these issues. That is, embodiments of this disclosure enable the UE to identify the target cell (or target TAG) of the random access procedure messages received and to correctly identify the random access procedure messages intended for it. For contention-based RACH, embodiments of the present disclosure enable the contention to be resolved.

Turning again to FIGURES 5A and 5B, the following message exchanges are used for the random access procedures shown in FIGURES 5A and 5B. This summarizes the possible message exchanges described in LTE release 10.

Message 0: PDCCH order sent by the eNodeB to the UE to initiate a random access procedure. The PDCCH order can optionally indicate a dedicated Random Access (RA) Preamble for the non-contention based random access procedure. The PDCCH order is transmitted using DCI format 1A with the cyclic redundancy code (CRC) scrambled by cell radio network temporary identifier (C-RNTI) in both the common and the UE-specific search spaces (see Section 8.0 of REF8). An enabler is provided in LTE release 10 for the DCI format to carry a Carrier Indicator Field (CIF) if cross-carrier scheduling is configured (Sec 5.3.3.1.3 of REF7). Cross-carrier scheduling for the PDCCH order can be supported in LTE release 11 with the inclusion of CIF in the DCI format, as described in greater detail below.

Message 1: Random access preamble transmission by the UE on the Physical Random Access Channel (PRACH). This is performed by the UE on the uplink carrier as indicated by the CIF in the PDCCH order.

Message 2: Random Access Response (RAR) sent by the eNodeB to UE. The RAR contains the 11-bit timing advance command (see Section 6.2.3 of REF5). The RAR is transmitted using DCI format 1C or 1A with the CRC scrambled by the random access radio network temporary identifier (RA-RNTI) in the common search space (See Section 7.1 of REF8).

Message 3 or uplink transmission: Scheduled transmission by the UE. This is performed by the UE on the UL carrier as indicated by the RAR (message 2).

Message 4: Contention resolution (for contention based random access only). Cross-carrier scheduling for the PDCCH for the purpose of contention resolution is already supported in LTE release 10. A CIF included in the PDCCH with the CRC scrambled by C-RNTI can be used to indicate which target cell the contention resolution is for. Cross-carrier scheduling for contention resolution can be supported in LTE release 11 with the inclusion of CIF in the DCI format, as described in greater detail below.

FIGURES 6A and 6B illustrate the problems of differentiating the target TAG or cell for the PDCCH order, the RAR, or the contention resolution when cross-carrier scheduling is configured. These are problems that embodiments of this disclosure resolve. For example, in Message 0 (PDCCH order), a method is required to identify the target TAG or cell of the PDCCH order. In Message 2 (RAR), a method is required to identify the target TAG or cell of the RAR. Also, a method is required to resolve the ambiguity of the target UE of the RAR for non-contention-based RACH. In Message 4 (Contention resolution), a method is required for contention resolution. As illustrated in FIGURE 6A, the arrows represent a linkage configured, for example, by a schedul-ingcellinfo routine described in greater detail below. The embodiments of this disclosure described below primarily refer to the cell arrangement shown in FIGURE 6A.

Note that in the following embodiments, for the scenario described in FIGURES 6A and 6B, it can be assumed that cross-carrier scheduling has been configured. In accordance with this scenario, the random access response associated with the RA preamble transmitted (e.g., PDCCH or PDSCH with the medium access control (MAC) RAR) is transmitted on the scheduling cell according to the cross-carrier scheduling configuration (e.g., DL CC 0 as shown in FIGURE 6A). However, it should be noted that the procedure described for the contention resolution is also applicable for embodiments where cross-carrier scheduling is not configured (i.e., when CIF does not exist in the DCI format).

In addition, the following embodiments also address the situation where the common search space on the SCell is not defined. For example, FIGURES 7A and 7B illustrate scenarios where a common search space is not defined on the SCell. Since the random access response for the SCell is also sent on the PCell, there is potential ambiguity of the target UE for the random access response sent by the eNodeB on the PCell. Thus, "cross-carrier operation" may be required for Message 2 reception, as illustrated in FIGURE 7. In this scenario, the random access response associated with the RA preamble transmitted (PDCCH, PDSCH with the MAC RAR) is transmitted on the PCell, as shown in FIGURES 7A and 7B.

In accordance with embodiments of this disclosure, a RACH resource is identified by the random access preamble, and the PRACH resource index is used to transmit the random access preamble.

## Methods for Indication of Target TAG/Cell in PDCCH Order

For the DCI format used for a random access procedure initiated by a PDCCH order transmitted in a UE-specific search space (i.e., DCI format 1A in LTE releases 8, 9, 10), the Carrier Indicator Field (CIF) is configured in the DCI format to indicate the target TAG/cell of which the random access procedure is initiated. For example, CIF='000' indicates TAGO/CCO and CIF='001' indicates TAG1/CC1.

### Embodiment PO-1:

In one embodiment, denoted as embodiment PO-1, for the DCI format transmitted in the common search space where the CIF does not exist, a default TAG/cell is assumed. For example, the default may be TAGO (pTAG)/CCO (PCell) or the cell where the PDCCH order is transmitted).

### Embodiment PO-2:

In another embodiment, denoted as embodiment PO-2, for the DCI format used for a random access procedure initiated by a PDCCH order transmitted in the common search space, a target TAG indicator field (TIF) or carrier indicator field (CIF) is introduced. The TIF/CIF is an x-bit field provided to indicate the target TAG/cell of which the random access procedure is initiated. In one method, the value x is a fixed value, e.g., x=1, or x=2, or x=3. In another method the value x is configured by higher-layer signaling (e.g., RRC signaling).

In one example of embodiment PO-2, when x=3, TIF/CIF='000' indicates TAGO/CCO and TIF/CIF='001' indicates TAG1/CC1. In another example, when x=2, TIF/CIF='00' indicates TAGO/CCO and TIF/CIF='01' indicates TAG1/CC1.

FIGURES 8A and 8B illustrate new PDCCH orders that include the TIF/CIF, extended from the legacy DCI format 1A, according to embodiments of this disclosure. FIGURE 8A illustrates a new DCI format 1A in the common search space. FIGURE 8B illustrates a new DCI format 1A in a UE-specific search space.

As shown in FIGURE 8A, the legacy DCI format 1A is modified to include the new TIF/CIF. When DCI format 1A is transmitted for a random access procedure initiated by a PDCCH order in the common search space, x bits out of the existing zero-padding bits in the legacy DCI format 1A are converted to the TIF. This method of reusing padding bits of DCI format 1A to indicate the target TAG/cell for random access procedure increases the cross-carrier PDCCH order capacity and improves cross-carrier PDCCH order scheduling flexibility.

In contrast, x bits are added to the legacy DCI format 1A in the UE-specific search space, as shown in FIGURE 8B. No bits are taken from the zero-padding bits.

An example design for the DCI format 1A in the common search space is described below:

- Flag for format0/format1A differentiation: 1 bit, where value 0 indicates format 0 and value 1 indicates format 1A. Format 1A is used for a random access procedure initiated by a PDCCH order only if format 1A CRC is scrambled with C-RNTI and all the remaining fields are set as follows.
- Localized/Distributed VRB assignment flag: 1 bit is set to '0'.
- Resource block assignment: $$\left\lceil \log_2\left(N_{RB}^{DL}\left(N_{RB}^{DL}+1\right)/2\right) \right\rceil$$ bits, where all bits are set to 1.
- Preamble Index: 6 bits.
- PRACH Mask Index: 4 bits (see REF5).
- Target TAG/cell indicator (TIF/CIF): x bits. This field is present if format 1A is in common search space and if cross-carrier scheduling of the PDCCH order is configured.
- All the remaining bits in format 1A for compact scheduling assignment of one PDSCH codeword are set to zero.

**Methods for Non-Contention Based Random Access Procedure for SCell**

**Embodiment NCR-1:**

In one embodiment, denoted as embodiment NCR-1, a RACH resource is assigned for each UE and each TAG/cell (both UE-specific and TAG/cell-specific), as illustrated in FIGURE 9. FIGURE 9 illustrates distinct RACH resources, according to an embodiment of this disclosure. The RACH resources are denoted as A, B, C, and D. Each RACH resource is uniquely assigned to a UE and a TAG/cell. For example, RACH resource A is assigned to UE 1 and TAG/cell 0. A dedicated RACH resource has a dedicated random access preamble, a dedicated PRACH resource index, or both, across the UEs and TAGs/cells.

The non-contention based random access procedure for a SCell is as follows.

Step 0: PDCCH order (message 0) sent by the eNodeB to the UE to initiate a random access procedure: The PDCCH order indicates the target TAG/cell. The design specified in embodiment PO-1 or PO-2 can be used.

In one embodiment, if the CIF is supported and is configured, the DCI format used for PDCCH order (e.g., DCI format 1A) includes the CIF. For example, CIF='000' indicates TAGO/CCO and CIF='001' indicates TAG1/CC1. The PDCCH order with the CIF can be transmitted in the scheduling cell's UE-specific search space, or in the scheduling cell's common search space (according to embodiment PO-2), where the scheduling cell can be a cell other than the cell used for the corresponding RA-preamble transmission (e.g., the PCell). If the CIF is not configured, then the PDCCH order is transmitted in the same cell as the cell used for RA-preamble transmission. In other words, if the CIF is not configured, the UE knows the cell used for RA preamble transmission from the cell used for PDCCH order transmission. For example, if the PDCCH order transmission is received in cell 1, then the RA preamble is also transmitted in cell 1. Likewise, if the PDCCH order transmission is received in cell 2, then the RA preamble is also transmitted in cell 2.

In another embodiment, the PDCCH order for the SCell includes the CIF and is transmitted in a fixed and predefined cell (e.g., the PCell). In this embodiment, the PDCCH order with CIF is transmitted in the UE-specific search space of the PCell or in the PCell's common search space (according to embodiment PO-2). The CIF indicates the target cell for the RA-preamble transmission as in the previous embodiment.

The PDCCH order indicates a dedicated RACH resource for the random access preamble transmission (the random access preamble and PRACH resource indicated constitute a dedicated RACH resource across UEs and TAGs/cells). The random access preamble is assigned by the eNodeB from the set of reserved dedicated random access preambles (recognized by all UEs, including the legacy UEs).

Step 1: Random access preamble transmission (message 1) by the UE on PRACH: The UE transmits the random access preamble on the target UL carrier as indicated by the PDCCH order as described in Step 0.

Step 2: Random access response (message 2) sent by the eNodeB to the UE: The UE monitors the random access response(s) using the RA-RNTI. The UE may stop monitoring for random access response(s) after successful reception of a random access response containing random access preamble identifiers that match the transmitted random access preamble. Due to the uniqueness of the assigned RACH resource in Step 0, the UE is able to determine the target cell of the RAR without ambiguity. There is also no contention issue between the UE and the other UEs, including the legacy UEs.

Step 3: Scheduled UL transmission by the UE: The UE transmits on the target UL carrier according to the UL grant from the RAR.

**Embodiment NCR-2:**

In another embodiment, denoted as embodiment NCR-2, a RACH resource is assigned for each UE in a TAG/cell (UE-specific in a TAG/cell), but the same dedicated RACH resource may be reused in each TAG/cell, as illustrated in FIGURE 10. FIGURE 10 illustrates distinct RACH resources, according to embodiments of this disclosure. The RACH resources are denoted as A and B. Each RACH resource is assigned to a UE and a TAG/cell. However, the RACH resources are reused in each TAG/cell. Thus, RACH resources A and B are used in TAG/cell 0 and TAG/cell 1. FIGURE 10 illustrates two possible arrangements of assignments. Compared to the embodiment NCR-1, the amount of dedicated RACH resources required does not increase linearly with the number of TAGs/cells. Thus, a savings of dedicated RACH resources can be achieved.

The non-contention based random access procedure for a SCell is as follows.

Step 0: PDCCH order (message 0): This step is the same as Step 0 of embodiment NCR-1, as described above, except that the PDCCH order indicates a dedicated RACH resource for the random access preamble for transmission for each UE (the random access preamble and PRACH resource indicated constitute a dedicated RACH resource across UEs). The random access preamble is assigned by the eNodeB from the set of reserved dedicated random access preambles (recognized by all UEs, including the legacy UEs).

Step 1: Random access preamble (message 1): This step is the same as Step 1 of embodiment NCR-1, as described above.

Step 2: Random Access Response (message 2) sent by the eNodeB to the UE:

The UE monitors Random Access Response(s) using the random access radio network temporary identifier (RA-RNTI) associated with the PRACH in which the Random Access Preamble is transmitted. In addition to the time and frequency resource of the PRACH, the computation of RA-RNTI also takes into account multiple TAGs/cells. Three methods are described below.

Method 1: The RA-RNTI is computed as a function of the PRACH time and frequency ID, as well as the TAG/cell ID, i.e. RA-RNTI = fn(t_id, f_id, tag_id) or RA-RNTI = fn(t_id, f_id, cell_id), where t_id is the index of the first subframe of the specified PRACH (0 ≤ t_id < t_id_max), and f_id is the index of the specified PRACH within that subframe, in ascending order of frequency domain (0 ≤ f_id < f_id_max). The t_id_max and f_id_max values are specified to be 10 and 6, respectively, in REF5. The tag_id (or cell_id) value is the index of the TAG (cell). The tag_id for TAG including the PCell is assumed to be 0. The cell_id can be the same as ServCellIndex, as defined in REF6.

This method of RA-RNTI computation enables the UE to identify the target TAG/ cell for the detected random access response according to the value of RA-RNTI. This method can also resolve potential ambiguity of the target recipient of the RAR. Some examples of RA-RNTI computation using this method are:

> Example 1a: RA-RNTI = 1 + t_id + t_id_max * f_id + t_id_max * f_id_max * tag_id (cell_id), where tag_id (cell_id) = {1,2,...,N}, where N is the number of TAGs (cells) not including PCell. With t_id_max = 10 and f_id_max = 6, RA-RNTI = 1 + t_id + 10 * f_id + 60 * tag_id (cell_id).
>
> Example 1b: RA-RNTI = 1 + t_id + t_id_max * f_id + m * tag_id (cell_id), where tag_id (cell_id) = {1,2,...,N}, where N is the number of TAGs (cells), not including PCell and m is a configurable value depending on whether it is a FDD/TDD system.

With t_id_max = 10, RA-RNTI = 1 + t_id + 10 * f_id + m * tag_id (cell_id). In LTE release 10, f_id = 0 for FDD, hence m = 10 for FDD; whereas m = 60 for TDD since f_id_max = 6 for TDD.

Here, the advantage is that fragmentation of RA-RNTI values can be avoided. The optimized RA-RNTI range depends on FDD/TDD. It is noted that this method can be generalized such that the value m is dependent on the actual PRACH resource configuration of the cell where the RAR is transmitted.

Example 1c: The tag_id (cell_id) in Examples 1a and 1b can be replaced with tag_id_offset (cell_id_offset), where tag_id_offset = tag_id_target - tag_id_ref, and cell_id_offset = cell_id_target - cell_id_ref. The tag_id_target (cell_id_target) is the TAG ID (cell ID) of the target TAG (cell) of the RAR, and tag_id_ref (cell_id_ref) refers to the tag ID (cell ID) of the cell where the RAR is transmitted. It is assumed tag_id_target (cell_id_target) ≥ tag_id_ref (cell_id_ref).

One advantage of this method is that RA-RNTI values for the cell where the RAR is transmitted are of the same range for non-cross-carrier scheduling and cross carrier scheduling in case the cell is a SCell. Another advantage of this method is that it allows the same RA-RNTI value to be shared by more UEs, including legacy UEs whereby the cell is configured as their PCells. As a result, more RARs can be included in the MAC RAR PDU.

Method 2: The RA-RNTI is computed as a function of the PRACH time and frequency ID, RA-RNTI = 1 + t_id + 10 * f_id, with f_id spanning multiple carriers. Some examples of RA-RNTI computation using this method are:

> Example 2a: The f_id can be defined as the index of the specified PRACH within a subframe, in ascending order of frequency domain, from the carrier of lowest frequency to the highest frequency, e.g., assuming each cell with PRACH is configured with 6 frequency resources, then 0 ≤ f_id < 6*N+6, where N is the number of TAGs (cells) not including PCell.
>
> Example 2b: Similar to Example 2a, except that (0 ≤ f_id < f_id_max) is reserved for the cell where the RAR is transmitted, and the rest of f_id's are defined as the indices of the specified PRACH within a subframe in ascending order of frequency domain for the remaining carriers.

An advantage of this method is that RA-RNTI values for the cell where the RAR is transmitted are of the same range for non-cross carrier scheduling and cross carrier scheduling.

Method 3: The RA-RNTI is computed as a function of the PRACH time and frequency ID, as well as a cell offset, i.e., RA-RNTI = fn(t_id, f_id, cell-offset) where t_id and f_id can be defined as in LTE release 10. The t_id is the index of the first subframe of the specified PRACH (0 ≤ t_id < t_id_max), f_id is the index of the specified PRACH within that subframe, in ascending order of frequency domain (0 ≤ f_id < f_id_max). The t_id_max and f_id_max values are specified to be 10 and 6, respectively, in REF5. The cell-offset is a network-configured integer offset (e.g., RRC configured), e.g., cell-offset = {0, 1,2...}. The cell-offset is applicable for a SCell if it is configured to be cross-carrier scheduled from another cell and/or if the SCell can be used by the UE to transmit the PRACH.

In one alternative (Alternative 3-1), the cell-offset can be frequency-specific for all UEs. That is, two UEs' SCell with the same carrier frequency has the same cell-offset.

In another alternative (Alternative 3-2), from a UE's perspective, the cell-offsets are frequency-specific among the cells that can be scheduled from the same scheduling cell (the cell where the PDCCH order was received). The cell-offsets can be reused for another group of cells that can be scheduled from another scheduling cell. The network can configure the cell-offset of a carrier such that it is common for all UEs configured with the carrier and the carrier is linked to the same scheduling cell. The advantage of Alternative 3-2 compared to Alternative 3-1 is that RA-RNTI space can be saved.

Method 3 of RA-RNTI computation enables the UE to identify the target TAG/cell for the detected random access response according to the value of the RA-RNTI. In addition, ambiguity of the intended recipient of the RAR between two UEs on the same responding cell (the cell transmitting Msg2), which transmitted PRACH on different SCell but using the RA resource assignment which results in the same t_id, f_id and the RA preamble index, can be avoided by assigning a different cell-offset for the different SCell (but can be common values for both UEs).

Some examples of RA-RNTI computation using Method 3 are:

> Example 3a: RA-RNTI = 1 + t_id + t_id_max * f_id + t_id_max * f_id_max * cell-offset. With t_id_max = 10 and f_id_max = 6, RA-RNTI = 1 + t_id + 10 * f_id + 60 * cell-offset. The cell-offset for the scheduling cell or responding cell (i.e. the cell transmitting Msg2, e.g., the PCell) is absent or is fixed to 0.
>
> Example 3b: RA-RNTI = 1 + t_id + t_id_max * f_id + m * cell-offset, where m is a configurable value depending on whether it is a FDD/TDD system. With t_id_max = 10, RA-RNTI = 1 + t_id + 10 * f_id + m * cell-offset. In LTE release 10, f_id = 0 for FDD, hence m = 10 for FDD; whereas m = 60 for TDD since f_id_max = 6 for TDD. The cell-offset for the scheduling cell or responding cell (i.e. the cell transmitting Msg2, e.g., the PCell) can be absent or can be fixed to 0.

The advantage of Example 3b is an optimized RA-RNTI range depending on FDD/ TDD. It is noted that this example can be generalized such that the value m is dependent on the actual PRACH resource configuration of the cell where the RAR is transmitted.

In one example of cell-offset signaling, the cell-offset can be signaled by the RRC in information element (IE) CrossCarrierSchedulingConfig (see REF6) where the cell-offset is called ra-rnti-offset. FIGURE 11 illustrates the IE CrossCarrierSchedulingConfig according to one embodiment of this disclosure. The new IE ra-rnti-offset (indicated by the arrow) is configured if the SCell concerned can be used for PRACH transmission. This condition can be based on whether RACH related parameters for the SCell is configured (e.g., this is equivalent to RACH-ConfigCommon for the SCell (see REF6)).

In another example of cell-offset signaling, the cell-offset for each SCell that can be cross-carrier scheduled can be signaled from the scheduling cell or responding cell (i.e. the cell transmitting Msg2, e.g., the PCell). This list of cell offsets can be dedicatedly signaled (e.g., via the RRC) from the scheduling cell or the responding cell. If the scheduling cell/responding cell is the PCell, this list of cell offsets can also be signaled in the system information block.

The UE may stop monitoring for Random Access Response(s) after successful reception of a Random Access Response containing Random Access Preamble identifiers that match the transmitted Random Access Preamble.

Since RA-RNTI effectively takes multiple TAGs or cells into account, the UE is able to determine the target cell/TAG of the RAR without ambiguity. There is also no ambiguity of intended UE for the RAR reception. Due to the assignment of UE-specific RACH resources per cell, as shown in FIGURE 10, there is also no contention issue between the UE concerned and the other UEs, including the legacy UEs for each cell.

Step 3: Scheduled uplink transmission by the UE: The UE transmits on the target UL carrier according to the UL grant from the RAR.

**Embodiment NCR-3:**

In another embodiment, denoted as embodiment NCR-3, a RACH resource is assigned for each UE in a TAG/cell (UE-specific in a TAG/cell), but the same dedicated RACH resource can be reused in each TAG/cell, as illustrated in FIGURE 10. Compared to the embodiment NCR-1, the amount of dedicated RACH resources required does not increase linearly with the number of TAGs/cells. Thus, a savings of dedicated RACH resources can be achieved.

The non-contention based random access procedure for a SCell is as follows.

Step 0: PDCCH order (message 0): This step is the same as Step 0 of embodiment NCR-2, as described above.

Step 1: Random access preamble transmission (message 1) by the UE on PRACH: This step is the same as Step 1 of embodiment NCR-2, as described above.

Step 2: Random Access Response (message 2) sent by the eNodeB to the UE:

The UE monitors Random Access Response(s) using the RA-RNTI associated with the PRACH in which the Random Access Preamble is transmitted. The x-bit TAG ID or cell ID, which indicates the target TAG/cell for the RAR, is included in MAC RAR PDU. Here, x can be fixed or configurable. Four methods (Methods A through D) are described below.

Method A: The TAG ID or cell ID that indicates the target TAG/cell for the RAR is included in MAC RAR payload. A design example is shown in FIGURE 12, where the TAG/carrier indicator field (i.e., the TIF or CIF) is added and serves as the indication of the TAG/cell. The MAC RAR with TIF/CIF is of a different size compared to the legacy MAC RAR, but it has a fixed payload size. MAC RARs with TIF/CIF can be appended at the end of the MAC PDU for RAR, as shown in FIGURE 13A.

Referring to FIGURE 13A, the extension field for MAC subheader n is set to 0 to indicate the start of the legacy MAC RAR payload. The LTE release 11 UEs look for MAC headers for RAR with TIF/CIF after the legacy MAC RAR payloads. The extension field for MAC subheader m is set to 0 to indicate the start of the new MAC RAR payload for LTE release 11 UEs.

The subheader for backoff indicator can be optionally present in the MAC header for RAR with TIF/CIF. If present, the subheader for backoff indicator is located in front of the MAC header. Multiple subheaders for backoff indicator can be present; each is a backoff indicator for a TAG/cell. A LTE release 10 backoff indicator subheader is shown in FIGURE 14. The two reserved bits in the LTE release 10 backoff indicator subheader can be used as a TIF/CIF, as shown in FIGURE 15. By using two bits, up to four (4) TAG/cells can be indicated.

Method B: The TIF/CIF is implicitly indicated or predefined by the location of the block of the MAC header and the MAC RAR payload in the MAC PDU. An example is shown in FIGURE 16. The LTE release 10 MAC CE design can be reused for each block.

Method C: The TIF/CIF is located in the MAC subheader. An example design for the MAC subheader with random access preamble identifier (RAPID) and TIF/CIF is shown in FIGURE 17. The TIF/CIF can also be included in the MAC subheader for backoff indicator (multiple can be concatenated).

The subheader for backoff indicator can be optionally present in the MAC header for RAR with TIF/CIF. If present, the subheader for backoff indicator is located in front of the MAC header. Multiple subheaders for backoff indicator can be present; each is a backoff indicator for a TAG/cell. A LTE release 10 backoff indicator subheader is shown in FIGURE 14. The two reserved bits in the LTE release 10 backoff indicator subheader can be used as a TIF/CIF, as shown in FIGURE 15.

Method D: A new subheader with a field indicating the TIF/CIF is included in the MAC header decoded by the UE supporting multiple timing advances. The TIF/CIF subheader is located first in the MAC header. Multiple TIF/CIF subheaders can be present, and there is one TIF/CIF subheader before the corresponding block of information bits (MAC subheaders and MAC RAR payload) for the TAG/cell. The TIF/ CIF subheader may also include a flag to indicate if the TIF/CIF subheader is the last one in the MAC PDU (i.e., there are no more MAC headers after the corresponding MAC RAR payload, and the padding shall start). A backoff indicator subheader, if present, is located after the TIF/CIF subheader, and it corresponds to the TAG/cell indicated by the TIF/CIF.

Compared to methods A through C, method D has low overhead, since only one byte may be needed for each block of MAC subheaders and RAR payload for a TAG/Cell. This is illustrated in FIGURE 18. One example for the TIF/CIF subheader is shown in FIGURE 19. To support the situation where the legacy MAC header and payload may not be present in the MAC PDU, the LTE release 11 UE is able to identify if a subheader is a backoff indicator, a RAPID subheader, or a TIF/CIF subheader. Thus, as shown in FIGURE 19, the Type Field is extended to be more than one bit, e.g., two (2) bits, with the value '01' indicating the TIF/CIF subheader. (It is noted that '00' indicates a backoff indicator and '1X' indicates a RAPID subheader, where X is the first bit of RAPID). E2 is a flag that indicates if the TIF/CIF subheader is the last one in the MAC PDU.

For all of methods A through D, a bit string having a predefined pattern of bits can be used to indicate that padding starts at the next byte. For example, the bit string '00110000' can be the predefined pattern for Method A, B and C, since the bit string cannot be mistaken to be the subheader with the backoff indicator or with RAPID. This enables the UE to stop searching for its MAC RAR in the current MAC PDU.

For all the above methods, backward compatibility with legacy UEs is ensured by appending MAC subheaders and MAC RARs with TIF/CIF after the legacy MAC payload. This is because the legacy UEs will treat the appended MAC subheaders and MAC RARs with TIF/CIF as part of the padding bits (where the UE assumes no particular values), as shown in FIGURE 13B for Method A.

The UE may stop monitoring for Random Access Response(s) after successful reception of a Random Access Response containing Random Access Preamble identifiers that match the transmitted Random Access Preamble.

Since the RAR indicates the target TAG/cell, the UE is able to determine the target TAG/cell of the RAR without ambiguity. There is also no ambiguity of intended UE for the RAR reception per cell. Due to the assignment of UE-specific RACH resources, as shown in FIGURE 10, there is also no contention issue between the UE concerned and the other UEs in each cell, including the legacy UEs.

Step 3: Scheduled transmission UL by the UE: The UE transmits on the target UL carrier according to the UL grant from the RAR.

**Embodiment NCR-4:**

In another embodiment, denoted as embodiment NCR-4, a RACH resource is assigned for each UE in a TAG/cell (UE-specific in a TAG/cell), but the same dedicated RACH resource can be reused in each TAG/cell, as illustrated in FIGURE 10. Compared to the embodiment NCR-1, the amount of dedicated RACH resources required does not increase linearly with the number of TAGs/cells. Thus, a savings of dedicated RACH resources can be achieved.

The non-contention based random access procedure for a SCell is as follows.

Step 0: PDCCH order (message 0): This step is the same as Step 0 of embodiment NCR-2, as described above.

Step 1: Random access preamble transmission (message 1) by the UE on PRACH: This step is the same as Step 1 of embodiment NCR-2, as described above.

Step 2: Random Access Response (message 2) sent by the eNodeB to the UE:

The UE monitors Random Access Response(s) using the RA-RNTI associated with the PRACH in which the Random Access Preamble is transmitted. The DCI format for RAR is transmitted in the UE-specific search space determined by the UE's C-RNTI. The CIF is included in the PDCCH (e.g., DCI format 1A) to indicate the target TAG/ cell of the RAR. The UE may stop monitoring for Random Access Response(s) after successful reception of a Random Access Response containing Random Access Preamble identifiers that match the transmitted Random Access Preamble.

The UE determines the target TAG/cell of the RAR from the CIF of the DCI format. Due to the assignment of UE-specific RACH resources, as shown in FIGURE 10, there is also no contention issue between the UE concerned and the other UEs, including the legacy UEs.

**Embodiment NCR-5:**

In another embodiment, denoted as embodiment NCR-5, a RACH resource is assigned for each UE in a TAG/cell (UE-specific in a TAG/cell), but the same dedicated RACH resource can be reused in each TAG/cell. Furthermore, the UE-specific RACH resource is the same for a UE regardless of the TAG/cell, as illustrated in FIGURE 20. Compared to the embodiment NCR-1, the amount of dedicated RACH resources required does not increase linearly with the number of TAGs/cells. Thus, a savings of dedicated RACH resources can be achieved. Compared to the scenario described in embodiment NCR-2 or NCR-3, the scenario described in this embodiment includes some differences.

The non-contention based random access procedure for a SCell is as follows.

Step 0: PDCCH order (message 0): This step is the same as Step 0 of embodiment NCR-2, as described above, except that there is only one on-going random access procedure at any point in time. If another PDCCH order is received before the previous random access procedure is completed, the UE may abandon the on-going procedure and restart the new procedure (even if the new procedure is for a different cell).

Step 1: Random access preamble transmission (message 1) by the UE on PRACH: This step is the same as Step 1 of embodiment NCR-2, as described above.

Step 2: Random Access Response (message 2) sent by the eNodeB to the UE:

The UE monitors Random Access Response(s) using the RA-RNTI associated with the PRACH in which the Random Access Preamble is transmitted. The UE may stop monitoring for Random Access Response(s) after successful reception of a Random Access Response containing Random Access Preamble identifiers that match the transmitted Random Access Preamble.

Since there is only one on-going random access procedure, the UE is able to determine the target TAG/cell of the RAR without ambiguity. Due to the assignment of UE-specific RACH resources per cell, as shown in FIGURE 20, there is also no contention issue between the UE concerned and the other UEs for each cell, including the legacy UEs.

Step 3: Scheduled UL transmission by the UE: The UE transmits on the target UL carrier according to the UL grant from the RAR.

**Embodiment NCR-6:**

In LTE release 10, the common search space on the PDCCH region of an SCell is not defined. In the common search space on the SCell, the PDCCH is also not defined in LTE release 11. In one embodiment (denoted by embodiment NCR-6), the random access response PDCCH and PDSCH can be received from the PCell. Assuming non-contention based random access is supported for the SCell, the random access procedure for SCell can be as follows:

Step 0: PDCCH order (message 0) sent by the eNodeB to the UE to initiate a random access procedure:

The PDCCH order indicates the target TAG/cell. In one embodiment, if the CIF is supported and is configured, the DCI format used for PDCCH order (e.g. DCI format 1A) includes the CIF field. For example, CIF='000' indicates TAGO/CCO and CIF='001' indicates TAG1/CC1. The PDCCH order with the CIF can be transmitted in the scheduling cell's UE-specific search space, or in the scheduling cell's common search space (according to embodiment PO-2), where the scheduling cell can be a cell other than the cell used for the corresponding RA-preamble transmission (e.g., the PCell). If the CIF is not configured, then the PDCCH order is transmitted in the same cell as the cell used for RA-preamble transmission. In other words, if the CIF is not configured, the UE knows the cell used for RA preamble transmission from the cell used for PDCCH order transmission. For example, if the PDCCH order transmission is received in cell 1, then the RA preamble is also transmitted in cell 1. Likewise, if the PDCCH order transmission is received in cell 2, then the RA preamble is also transmitted in cell 2.

In another embodiment, the PDCCH order for the SCell includes the CIF and is transmitted in a fixed and predefined cell (e.g., the PCell). In this embodiment, the PDCCH order with CIF is transmitted in the UE-specific search space of the PCell, or in the scheduling cell's common search space (according to embodiment PO-2). The CIF indicates the target cell for the RA-preamble transmission as in the previous embodiment.

The PDCCH order also indicates a dedicated RACH resource for random access preamble transmission for each UE (random access preamble and PRACH resource indicated constitute a dedicated RACH resource across UEs). The random access preamble is assigned by the eNodeB from the set of reserved dedicated random access preambles (recognized by all UEs, including the legacy UEs). Specifically, for Random Access on a SCell, the PDCCH order indicates the ra-PreambleIndex with a value different from '000000' and the ra-PRACH-MaskIndex.

Step 1: Random access preamble transmission (message 1) by the UE on PRACH: The UE transmits the random access preamble on the target UL carrier as indicated by the PDCCH order as described in Step 0, using the RA preamble and time-frequency resource indicated by the PDCCH order.

Step 2: Random Access Response (message 2) sent by the eNodeB to the UE on the PCell: The UE monitors the PDCCH of the PCell for Random Access Response(s) identified by the RA-RNTI defined below, in the RA Response window. The RA Response window starts at the subframe that contains the end of the preamble transmission plus three subframes, and has length of ra-ResponseWindowSize subframes.

The RA-RNTI associated with the PRACH in which the Random Access Preamble is transmitted, is computed as: RA-RNTI = 1 + t_id + 10 * f_id + 60 * offset_indicator, where t_id is the index of the first subframe of the specified PRACH ($0 \leq t_id < 10$), and f_id is the index of the specified PRACH within that subframe, in ascending order of frequency domain ($0 \leq f_id < 6$). In one embodiment, the offset_indicator is set to 0 when the Preamble was transmitted on the PCell.

For the preamble transmitted on a SCell, the offset_indicator value is provided by higher layer signaling (called RA-RNTI-Offset-Indicator) for the SCell (e.g., RRC signaling). The value range of RA-RNTI-Offset-Indicator can be {0,1}, {0,1,2}, {0,1,2,3}, {0,1,2,3,4}, or {0, 1/6, 1/3, 2/3, 1}. It is noted that a RA-RNTI-Offset-Indicator value of 0 can also be implied by the absence of the higher layer signaling. Two SCells used for RA-preamble transmission may be configured to the same or different RA-RNTI-Offset-Indicator values. The RA-RNTI-Offset-Indicator can be dedicatedly signaled to the UE, i.e., UE-specific signaling. The RA-RNTI-Offset-Indicator can also be broadcasted, e.g. the system information block (SIB) on the PCell.

In an alternative embodiment, the offset indicator value is fixed to a value for SCells (e.g., RA-RNTI-Offset-Indicator = 1).

If a Random Access Response containing Random Access Preamble identifiers that matches the transmitted Random Access Preamble, and if either (i) the Random Access Preamble was transmitted on the PCell, or (ii) the Random Access Preamble was transmitted on an SCell and the Temporary C-RNTI value received in the Random Access Response message is equal to the UE's C-RNTI, then the UE considers the Random Access Response reception successful and may stop monitoring for Random Access Response(s).

The uplink grant obtained from the Random Access Response is applied to the corresponding cell that was previously used for the RA preamble transmission. The timing advance command from the Random Access Response is applied to the TAG that the cell used for RA-preamble transmission belongs to.

The use of different offset_indicator values for different cells allows the network not to coordinate preamble and time-frequency PRACH resources between the cells. Requiring the UE to match its C-RNTI with the C-RNTI transmitted in the Random Access Response allows the network to avoid preamble and time-frequency PRACH resources among the SCells.

Step 3: Scheduled UL transmission by the UE: The UE transmits on the target UL carrier according to the UL grant received from Step 2.

**Methods for Contention Based Random Access Procedure for SCell**

**Embodiment CR-1:**

In one embodiment, denoted as embodiment CR-1, the same RACH resource may be selected by two UEs in a TAG/cell (UE-specific in a TAG/cell), as illustrated in FIGURE 21. The contention based random access procedure for a SCell is as follows.

Step 0: PDCCH order (message 0) sent by the eNodeB to the UE to initiate a random access procedure (OPTIONAL):
The PDCCH order indicates the target TAG/cell. The design specified in embodiment PO-1 or PO-2 can be used.

In one embodiment, if the CIF is supported and is configured, the DCI format used for PDCCH order (e.g., DCI format 1A) includes the CIF field. For example, CIF='000' indicates TAGO/CCO and CIF='001' indicates TAG1/CC1. The PDCCH order with the CIF can be transmitted in the scheduling cell's UE-specific search space, or in the scheduling cell's common search space (according to embodiment PO-2), where the scheduling cell can be a cell other than the cell used for the corresponding RA-preamble transmission (e.g., the PCell). If the CIF is not configured, then the PDCCH order is transmitted in the same cell as the cell used for RA-preamble transmission. In other words, if the CIF is not configured, the UE knows the cell used for RA preamble transmission from the cell used for PDCCH order transmission. For example, if the PDCCH order transmission is received in cell 1, then the RA preamble is also transmitted in cell 1. Likewise, if the PDCCH order transmission is received in cell 2, then the RA preamble is also transmitted in cell 2.

In another embodiment, the PDCCH order for the SCell includes the CIF and is transmitted in a fixed and predefined cell (e.g., the PCell). In this embodiment, the PDCCH order with CIF is transmitted in the UE-specific search space of the PCell, or in the scheduling cell's common search space (according to embodiment PO-2). The CIF indicates the target cell for the RA-preamble transmission as in the first embodiment.

Step 1: Random access preamble transmission (message 1) by the UE on PRACH: The UE selects a random access preamble and a PRACH resource index. The UE transmits the selected random access preamble on the selected PRACH resource on the target UL carrier.

Step 2: Random Access Response (message 2) sent by the eNodeB to the UE:
The UE monitors Random Access Response(s) using the RA-RNTI associated with the PRACH in which the Random Access Preamble is transmitted. In addition to the time and frequency resource of the PRACH, the computation of RA-RNTI also takes into account multiple TAGs/cells. Three methods are described below.

Method 1: the RA-RNTI is computed as a function of the PRACH time and frequency ID, as well as the TAG/cell ID, i.e. RA-RNTI = fn(t_id, f_id, tag_id) or RA-RNTI = fn(t_id, f_id, cell_id), where t_id is the index of the first subframe of the specified PRACH ($0 \leq t_id < t_id_max$), and f_id is the index of the specified PRACH within that subframe, in ascending order of frequency domain ($0 \leq f_id < f_id_max$). The t_id_max and f_id_max values are specified to be 10 and 6, respectively, in REF5. The tag_id (or cell_id) value is the index of the TAG (cell). The tag_id for TAG including the PCell is assumed to be 0. The cell_id can be the same as ServCellIndex, as defined in REF6.

This method of RA-RNTI computation enables the UE to identify the target TAG/ cell for the detected random access response according to the value of RA-RNTI. Some examples of RA-RNTI computation using this method are:

Example 1a: RA-RNTI = 1 + t_id + t_id_max * f_id + t_id_max * f_id_max * tag_id (cell_id), where tag_id (cell_id) = {1,2,...,N}, where N is the number of TAGs (cells) not including PCell. With t_id_max = 10 and f_id_max = 6, RA-RNTI = 1 + t_id + 10 * f_id + 60 * tag_id (cell_id)
Example 1b: RA-RNTI = 1 + t_id + t_id_max * f_id + m * tag_id (cell_id), where tag_id (cell_id) = {1,2,...,N}, where N is the number of TAGs (cells), not including PCell and m is a configurable value depending on whether it is a FDD/TDD system.

With t_id_max = 10, RA-RNTI = 1 + t_id + 10 * f_id + m * tag_id (cell_id). In LTE release 10, f_id = 0 for FDD, hence m = 10 for FDD; whereas m = 60 for TDD since f_id_max = 6 for TDD.

Here, the advantage is that fragmentation of RA-RNTI values can be avoided. The optimized RA-RNTI range depends on FDD/TDD. It is noted that this method can be generalized such that the value m is dependent on the actual PRACH resource configuration of the cell where the RAR is transmitted.

Example 1c: The tag_id (cell_id) in Examples 1a and 1b can be replaced with tag_id_offset (cell_id_offset), where tag_id_offset = tag_id_target - tag_id_ref, and cell_id_offset = cell_id_target - cell_id_ref. The tag_id_target (cell_id_target) is the TAG ID (cell ID) of the target TAG (cell) of the RAR, and tag_id_ref (cell_id_ref) refers to the tag ID (cell ID) of the cell where the RAR is transmitted. It is assumed tag_id_target (cell_id_target) ≥ tag_id_ref (cell_id_ref).

One advantage of this method is that RA-RNTI values for the cell where the RAR is transmitted are of the same range for non-cross-carrier scheduling and cross carrier scheduling in case the cell is a SCell. Another advantage of this method is that it allows the same RA-RNTI value to be shared by more UEs, including legacy UEs whereby the cell is configured as their PCells. As a result, more RARs can be included in the MAC RAR PDU.

Method 2: The RA-RNTI is computed as a function of the PRACH time and frequency ID, RA-RNTI = 1 + t_id + 10 * f_id, with f_id spanning multiple carriers. Some examples of RA-RNTI computation using this method are:

Example 2a: The f_id can be defined as the index of the specified PRACH within a subframe, in ascending order of frequency domain, from the carrier of lowest frequency to the highest frequency e.g. assuming each cell with PRACH is configured with 6 frequency resources, then $0 \leq f_id < 6*N+6$, where N is the number of TAGs (cells) not including PCell.
Example 2b: Similar to Example 2a, except that ($0 \leq f_id < f_id_max$) is reserved for the cell where the RAR is transmitted, and the rest of f_id's are defined as the indices of the specified PRACH within a subframe in ascending order of frequency domain for the remaining carriers.

An advantage of this method is that RA-RNTI values for the cell where the RAR is transmitted are of the same range for non-cross carrier scheduling and cross carrier scheduling.

Method 3: The RA-RNTI is computed as a function of the PRACH time and frequency id, as well as a cell offset, i.e., RA-RNTI = fn(t_id, f_id, cell-offset) where t_id and f_id can be defined as in LTE release 10. The t_id is the index of the first subframe of the specified PRACH ($0 \leq t_id < t_id_max$), f_id is the index of the specified PRACH within that subframe, in ascending order of frequency domain ($0 \leq f_id < f_id_max$). The t_id_max and f_id_max values are specified to be 10 and 6, respectively, in REF5. The cell-offset is a network configured integer offset (e.g., RRC configured), e.g., cell-offset = {0, 1,2...}. The cell-offset is applicable for a SCell if it is configured to be cross-carrier scheduled from another cell and if the SCell can be used by the UE to transmit the PRACH.

In one alternative (Alternative 3-1), the cell-offset can be frequency-specific for all UEs. That is, two UEs' SCell with the same carrier frequency has the same cell-offset.

In another alternative (Alternative 3-2), from a UE's perspective, the cell-offsets are frequency-specific among the cells that can be scheduled from the same scheduling cell (the cell where the PDCCH order was received). The cell-offsets can be reused for another group of cells that can be scheduled from another scheduling cell. The network can configure the cell-offset of a carrier such that it is common for all UEs configured with the carrier and the carrier is linked to the same scheduling cell. The advantage of Alternative 3-2 compared to Alternative 3-1 is that RA-RNTI space can be saved.

Method 3 of RA-RNTI computation enables the UE to identify the target TAG/cell for the detected random access response according to the value of RA-RNTI. In addition, a collision of RAR between two UEs on the same responding cell (the cell transmitting Msg2), which transmitted PRACH on different SCell but using the RA resource assignment which results in the same t_id, f_id and the RA preamble index, can be avoided by assigning a different cell-offset for the different SCell (but can be common values for both UEs).

For the network, Method 3 allows the network to use the same RA-RNTI for contending UEs in the same responding cell (the cell transmitting Msg2). There may be also only one RA-RNTI value for the network to use for each potential responding cell.

Some examples of RA-RNTI computation using Method 3 are:

Example 3a: RA-RNTI = 1 + t_id + t_id_max * f_id + t_id_max * f_id_max * cell-offset. With t_id_max = 10 and f_id_max = 6, RA-RNTI = 1 + t_id + 10 * f_id + 60 * cell-offset. The cell-offset for the scheduling cell or responding cell (i.e. the cell transmitting Msg2) is absent or is fixed to 0.

Example 3b: RA-RNTI = 1 + t_id + t_id_max * f_id + m * cell-offset, where m is a configurable value depending on whether it is a FDD/TDD system. With t_id_max = 10, RA-RNTI = 1 + t_id + 10 * f_id + m * cell-offset. In LTE release 10, f_id = 0 for FDD, hence m = 10 for FDD; whereas m = 60 for TDD since f_id_max = 6 for TDD. The cell-offset for the scheduling cell or responding cell (i.e. the cell transmitting Msg2) can be absent or can be fixed to 0

The advantage of Example 3b is an optimized RA-RNTI range depending on FDD/ TDD. It is noted that this example can be generalized such that the value m is dependent on the actual PRACH resource configuration of the cell where the RAR is transmitted.

In one example for cell-offset signaling, the cell-offset can be signaled by the RRC in IE CrossCarrierSchedulingConfig (see REF6) where the cell offset is called ra-rnti-offset, as described in FIGURE 11. The new IE ra-rnti-offset is configured if the SCell concerned can be used for PRACH transmission. This condition can be based on whether RACH related parameters for the SCell is configured (e.g. this is equivalent to RACH-ConfigCommon for the SCell (see REF6)).

In another example for cell-offset signaling, the cell-offset for each SCell that can be cross-carrier scheduled can be signaled from the scheduling cell or responding cell (i.e. the cell transmitting Msg2). This list of cell offsets can be dedicatedly signaled (e.g., via the RRC) from the scheduling cell or the responding cell. If the scheduling cell/ responding cell is the PCell, this list of cell offsets can also be signaled in the SIB.

The UE may stop monitoring for Random Access Response(s) after successful reception of a Random Access Response containing Random Access Preamble identifiers that matches the transmitted Random Access Preamble. Since RA-RNTI effectively takes multiple TAGs or cells into account, the UE is able to determine the target cell/TAG of the RAR without ambiguity.

Step 3: Scheduled transmission (message 3) by the UE: The UE transmits message 3 on the target UL carrier.

Step 4: Contention resolution:

The UE considers the contention resolution successful and the random access procedure completed for the target TAG/cell if an uplink grant for a new transmission for the target TAG/cell where the CRC is scrambled by C-RNTI is received.

If the CIF exists in the DCI format for the UL grant (e.g. for DCI formats 0/4 in the UE-specific search space), the CIF indicates for which cell (or TA group) the contention resolution is applicable. For example, if the UL grant is transmitted on CCO, the CIF included in the DCI format can point to CCO (TAG0) or CC1 (TAG1). If the CIF doesn't exist in the DCI format for the UL grant, the UL grant (and contention resolution) is applicable for the cell where the PDCCH is transmitted.

The advantage of restricting to UL grant for contention resolution is that the downlink data transmission for the SCell is not interrupted or affected by the RACH procedure for SCell. That is, the downlink assignment and transmission can continue as normal for the SCell while the RACH procedure is carried out for the SCell.

**Embodiment CR-2:**

In another embodiment, denoted as embodiment CR-2, the same RACH resource may be selected by two UEs in a TAG/cell (UE-specific in a TAG/cell), as illustrated in FIGURE 21. The contention based random access procedure for a SCell is as follows.

Step 0: PDCCH order (message 0): This step, which is optional, is the same as Step 0 of embodiment CR-1, as described above.

Step 1: Random access preamble transmission (message 1) by the UE on PRACH: This step is the same as Step 1 of embodiment CR-1, as described above.

Step 2: Random Access Response (message 2) sent by the eNodeB to the UE. This step is substantially the same as Step 2 of non-contention based embodiment NCR-3, as described above. For convenience, the description is repeated below.

The UE monitors Random Access Response(s) using the RA-RNTI associated with the PRACH in which the Random Access Preamble is transmitted. The x-bit TAG ID or cell ID, which indicates the target TAG/cell for the RAR, is included in MAC RAR PDU. Here, x can be fixed or configurable. Four methods (Methods A through D) are described below.

Method A: The TAG ID or cell ID that indicates the target TAG/cell for the RAR is included in MAC RAR payload. A design example is shown in FIGURE 12, where the TAG/carrier indicator field (i.e., the TIF or CIF) is added and serves as the indication of the TAG/cell. The MAC RAR with TIF/CIF is of different size compared to the legacy MAC RAR, but it has a fixed payload size. MAC RARs with TIF/CIF can be appended at the end of the MAC PDU for RAR as shown in FIGURE 13A.

Referring to FIGURE 13A, the extension field for MAC subheader n is set to 0 to indicate the start of the legacy MAC RAR payload. The LTE release 11 UEs look for MAC headers for RAR with TIF/CIF after the legacy MAC RAR payloads. The extension field for MAC subheader m is set to 0 to indicate the start of the new MAC RAR payload for LTE release 11 UEs.

The subheader for backoff indicator can be optionally present in the MAC header for RAR with TIF/CIF. If present, the subheader for backoff indicator is located in front of the MAC header. Multiple subheaders for backoff indicator can be present; each is a backoff indicator for a TAG/cell. A LTE release 10 backoff indicator subheader is shown in FIGURE 14. The two reserved bits in the LTE release 10 backoff indicator subheader can be used as TIF/CIF, as shown in FIGURE 15. By using two bits, up to four (4) TAG/cells can be indicated.

Method B: The TIF/CIF is implicitly indicated or predefined by the location of the block of the MAC header and the MAC RAR payload in the MAC PDU. An example is shown in FIGURE 16. The LTE release 10 MAC CE design can be reused for each block.

Method C: The TIF/CIF is located in the MAC subheader. An example design for the MAC subheader with RAPID and TIF/CIF is shown in FIGURE 17. The TIF/CIF can also be included in MAC subheader for backoff indicator (multiple can be concatenated).

The subheader for backoff indicator can be optionally present in the MAC header for RAR with TIF/CIF. If present, the subheader for backoff indicator is located in front of the MAC header. Multiple subheaders for backoff indicator can be present; each is a backoff indicator for a TAG/cell. A LTE release 10 backoff indicator subheader is shown in FIGURE 14. The two reserved bits in the LTE release 10 backoff indicator subheader can be used as TIF/CIF, as shown in FIGURE 15.

Method D: A new subheader with a field indicating the TIF/CIF is included in the MAC header decoded by the UE supporting multiple timing advances. The TIF/CIF subheader is located first in the MAC header. Multiple TIF/CIF subheaders can be present, and there is one TIF/CIF subheader before the corresponding block of information bits (MAC subheaders and MAC RAR payload) for the TAG/cell. The TIF/ CIF subheader may also include a flag to indicate if the TIF/CIF subheader is the last one in the MAC PDU (i.e., there are no more MAC headers after the corresponding MAC RAR payload and the padding shall start). A backoff indicator subheader, if present, is located after the TIF/CIF subheader, and it corresponds to the TAG/cell indicated by the TIF/CIF.

Compared to methods A through C, method D has low overhead, since only one byte may be needed for each block of MAC subheaders and RAR payload for a TAG/Cell. This is illustrated in FIGURE 18. One example for the TIF/CIF subheader is shown in FIGURE 19. To support the situation where the legacy MAC header and payload may not be present in the MAC PDU, the LTE release 11 UE is able to identify if a subheader is a backoff indicator, a RAPID subheader or a TIF/CIF subheader. Thus, as shown in FIGURE 19, the Type Field is extended to be more than one bit, e.g. two (2) bits, with the value '01' indicating the TIF/CIF subheader. (It is noted that '00' indicates a backoff indicator and '1X' indicates a RAPID subheader, where X is the first bit of RAPID). E2 is a flag that indicates if the TIF/CIF subheader is the last one in the MAC PDU.

For all of methods A through D, a bit string having a predefined pattern of bits can be used to indicate that padding starts at the next byte. For example, the bit string '00110000' can be the predefined pattern for Method A, B and C, since the bit string cannot be mistaken to be the subheader with the backoff indicator or with RAPID. This enables the UE to stop searching for its MAC RAR in the current MAC PDU.

For all the above methods, backward compatibility with legacy UEs is ensured by appending MAC subheaders and MAC RARs with TIF/CIF after the legacy MAC payload. This is because the legacy UEs will treat the appended MAC subheaders and MAC RARs with TIF/CIF as part of the padding bits (where the UE assumes no particular values) as shown in FIGURE 13B for Method A.

The UE may stop monitoring for Random Access Response(s) after successful reception of a Random Access Response containing Random Access Preamble identifiers that match the transmitted Random Access Preamble.

Since the RAR indicates the target TAG/cell, the UE is able to determine the target TAG/cell of the RAR without ambiguity.

Step 3: Scheduled transmission (message 3) by the UE: The UE transmit message 3 on the target UL carrier.

Step 4: Contention resolution: This step is the same as Step 4 of embodiment CR-1, as described above.

**Embodiment CR-3:**

In another embodiment, denoted as embodiment CR-3, the same RACH resource may be selected by two UEs in a TAG/cell (UE-specific in a TAG/cell), as illustrated in FIGURE 21. In addition, in this embodiment, "contention" resolution may be also required for the scenario illustrated in FIGURE 22. The contention based random access procedure for a SCell is as follows.

Step 0: PDCCH order (message 0): This step, which is optional, is the same as step 0 of embodiment CR-1, as described above, except that there is only one on-going random access procedure at any point in time. If another PDCCH order is received before the previous random access procedure is completed, the UE may abandon the on-going procedure and restart the new procedure (even if the new procedure is for a different cell).

Step 1: Random access preamble transmission (message 1) by the UE on PRACH: The UE selects a random access preamble and a PRACH resource index. The UE transmits the selected random access preamble on the selected PRACH resource on the target UL carrier.

Step 2: Random Access Response (message 2) sent by the eNodeB to the UE:

The UE monitors Random Access Response(s) using the RA-RNTI associated with the PRACH in which the Random Access Preamble is transmitted. The UE may stop monitoring for Random Access Response(s) after successful reception of a Random Access Response containing Random Access Preamble identifiers that match the transmitted Random Access Preamble. Since there is only one on-going random access procedure, the UE is able to determine the target TAG/cell of the RAR.

Step 3: Scheduled transmission (message 3) by the UE: The UE transmits message 3 on the target UL carrier.

Step 4: Contention resolution: This step is the same as Step 4 of embodiment CR-1, as described above.

**Embodiment CR-4:**

In another embodiment, denoted as embodiment CR-4, the RACH resources that are available for the contention-based random access procedure are orthogonal between two TAGs/cells, as illustrated in FIGURE 23.

Orthogonality of RACH resources between two TAGs/cells is achieved by configuring (e.g., by the RRC) a set of RACH resources within the set of dedicated RACH resources configured for TAG0/Cell0, as the common RACH resources used for the contention-based random access procedure for TAG1/cell1. The size of the set of common RACH resources for TAG1/cell1 is less than or equal to the size of the dedicated RACH resources for TAG0/cell0. This is illustrated in FIGURE 24.

In one method, the set of orthogonal RACH resources is configured by configuring orthogonal random access preambles. The size of the dedicated random access preambles for TAG0/cell0 is determined by 64 - numberOfRA-Preambles in LTE release 8/9/10 (see REF6). It is noted that 64 is the total number of random access preambles available in a cell and numberOfRA-Preambles is the IE indicating the number of common random access preambles in a cell, signaled in SIB2 or RRC. The set of orthogonal random access preambles for TAG1/cell1 can be specified by a new IE numberOfRA-PreamblesSCell in RACH-ConfigCommonSCell, and the common random access preambles for the specified SCell (TAG1/cell1) can be {64 - numberOfRA-Preambles - numberOfRA-PreamblesSCell - 1 ... 64-numberOfRA-Preambles - 1}.

The contention based random access procedure for a SCell is as follows.

Step 0: PDCCH order (message 0) This step, which is optional, is the same as Step 0 of embodiment CR-1, as described above.

Step 1: Random access preamble transmission (message 1) by the UE on PRACH: The UE selects a random access preamble and a PRACH resource index from the set of common resources configured for the target TAG/cell by higher layer signaling (i.e. RACH-ConfigCommon, RACH-ConfigCommonSCell, PRACH-Config). The UE transmits the selected random access preamble on the selected PRACH resource on the target UL carrier.

Step 2: Random Access Response (message 2) sent by the eNodeB to the UE: The UE monitors Random Access Response(s) using the RA-RNTI associated with the PRACH in which the Random Access Preamble is transmitted. The UE may stop monitoring for Random Access Response(s) after successful reception of a Random Access Response containing Random Access Preamble identifiers that matches the transmitted Random Access Preamble.

Step 3: Scheduled transmission (message 3) by the UE: The UE transmits message 3 on the target UL carrier.

Step 4: Contention resolution: This step is the same as Step 4 of embodiment CR-1, as described above.

Although the present disclosure has been described with exemplary embodiments, various changes and modifications may be suggested to one skilled in the art. It is intended that the present disclosure encompass such changes and modifications as fall within the scope of the appended claims.

**Claims**

1. A method for random access procedure in a user equipment (111-116), comprising:

receiving a physical downlink control channel, PDCCH, order for initiating a random access procedure from an eNodeB (101-103);

if the user equipment is configured with multiple timing advance groups, TAGs, comprising a primary TAG and a secondary TAG, determining a serving cell for a transmission of a random access preamble among a cell of the primary TAG and a cell of the secondary TAG, based on a carrier indicator field value included in the received PDCCH order; and
initiating the random access procedure for the determined serving cell by transmitting the random access preamble on the determined serving cell,
wherein the carrier indicator field value indicates the cell of the secondary TAG as the serving cell for the transmission of the random access preamble, and
wherein, in the random access procedure, a random access channel resource is assigned based on the user equipment and the TAG,
wherein the PDCCH order comprises a downlink control information, DCI, format scrambled with cell-radio network temporary identifier C-RNTI, and
wherein the DCI format comprises at least one of DCI format differentiation flag, localized and distributed virtual resource block, VRB, assignment flag, resource block assignment bit, or preamble index.

**2.** The method of claim 1, further comprising:

receiving another PDCCH order for initiating a new random access procedure while the random access procedure is ongoing; and
performing only one of the new random access procedure and the random access procedure.

**3.** The method of claim 2, wherein the performing only one comprising:

abandoning the random access procedure; and
performing the new random access procedure based on the new PDCCH order.

**4.** The method of claim 1, wherein the PDCCH order is received on the cell of the primary TAG, and the serving cell is the cell of the secondary TAG.

**5.** The method of claim 1, further comprising:
receiving a random access response message using random access-radio network temporary identifier RA-RNTI associated with random access channel that is transmitted the random access preamble.

**6.** A method for a random access procedure for use in an eNodeB (101-103), the method comprising:

determining a carrier indicator field value to indicate a serving cell for a transmission of a random access preamble of a user equipment (111-116) among a cell of a primary timing advance group, TAG, and a cell of a secondary TAG;
transmitting a physical downlink control channel PDCCH order comprising the carrier indicator field value to the user equipment; and
receiving from the user equipment the random access preamble on the serving cell,
wherein, if the user equipment is configured with multiple TAGs comprising the primary TAG and the secondary TAG, the carrier indicator field value indicates the cell of the secondary TAG as the serving cell for the transmission of the random access preamble, and
wherein, in the random access procedure, a random access channel resource is assigned based on the user equipment and the TAG,
wherein the PDCCH order comprises a downlink control information, DCI, format scrambled with cell-radio network temporary identifier C-RNTI, and
wherein the DCI format comprises at least one of DCI format differentiation flag, localized and distributed virtual resource block, VRB, assignment flag, resource block assignment bit, or preamble index.

**7.** The method of claim 6, wherein the PDCCH order is transmitted on the cell of the primary TAG, and the serving cell is the cell of the secondary TAG.

**8.** The method of claim 6, further comprising:
transmitting a random access response message using random access-radio network temporary identifier RA-RNTI associated with random access channel that is transmitted the random access preamble.

**9.** A user equipment (111-116) configured for a random access procedure, the user equipment comprising:

a transceiver (310) configured to transmitting a signal;
a processor (340) configured to receive a physical downlink control channel PDCCH order for initiating a random access procedure from an eNodeB (101-103), if the user equipment is configured with multiple timing advance groups TAGs comprising a primary TAG and a secondary TAG, determine a serving cell for a transmission of a random access preamble among a cell of the primary TAG and a cell of the secondary TAG, based on a carrier indicator field value included in the received PDCCH order, and initiate the random access procedure for the determined serving cell by transmitting the random access preamble on the determined serving cell,
wherein the carrier indicator field value indicates the cell of the secondary TAG as the serving cell for the transmission of the random access preamble, and
wherein, in the random access procedure, a random access channel resource is assigned based on the user equipment and the TAG, wherein the PDCCH order comprises a downlink control information, DCI, format scrambled with cell-radio network temporary identifier C-RNTI, and wherein the DCI format comprises at least one of DCI format differentiation flag, localized and distributed virtual resource block, VRB, assignment flag, resource block assignment bit, or preamble index.

**10.** The user equipment of claim 9, wherein the user equipment arranged to implement a method of one of claims 2 to 5.

**11.** An eNodeB (101-103) configured for a random access procedure, the eNodeB comprising:

a transceiver (310) configured to transmitting a signal;
a controller (340) configured to determine a carrier indicator field value to indicate a serving cell for a transmission of a random access preamble transmission of a user equipment (111-116) among a cell of a primary timing advance group, TAG, and a cell of a secondary TAG, transmit a physical downlink control channel PDCCH order comprising the carrier indicator field value to the user equipment, and receive from the user equipment the random access preamble on the serving cell,
wherein, if the user equipment is configured with multiple TAGs comprising the primary TAG and the second TAG, the carrier indicator field value indicates the cell of the secondary TAG as the serving cell for the transmission of the random access preamble, and
wherein, in the random access procedure, a random access channel resource is assigned based on the user equipment and the TAG,
wherein the PDCCH order comprises a downlink control information, DCI, format scrambled with cell-radio network temporary identifier C-RNTI, and
wherein the DCI format comprises at least one of DCI format differentiation flag, localized and distributed virtual resource block, VRB, assignment flag, resource block assignment bit, or preamble index.

**12.** The eNodeB of claim 11, wherein the user equipment arranged to implement a method of one of claims 7 to 8.

**Patentansprüche**

**1.** Verfahren zur Direktzugriffsprozedur in einer Benutzerausrüstung (111-116), das Folgendes umfasst:

Empfangen eines Auftrags eines physikalischen Downlinkorganisationskanals, Physical Downlink Control Channel, PDCCH-Auftrags zum Auslösen einer Direktzugriffsprozedur von einem eNodeB (101-103);
wenn die Benutzerausrüstung mit mehreren Zeitvorlaufgruppen, Timing Advance Groups, TAG, konfiguriert ist, die eine primäre TAG und eine sekundäre TAG umfassen, Ermitteln einer Serving-Cell für eine Sendung einer Direktzugriffspräambel unter einer Zelle der primären TAG und einer Zelle der sekundären TAG basierend auf einem Trägerindikatorfeldwert, der im empfangenen PDCCH-Auftrag beinhaltet ist; und
Auslösen der Direktzugriffsprozedur für die ermittelte Serving-Cell durch Senden der Direktzugriffspräambel über die ermittelte Serving-Cell,
wobei der Trägerindikatorfeldwert die Zelle der sekundären TAG als die Serving-Cell für die Sendung der Direktzugriffspräambel angibt und wobei in der Direktzugriffsprozedur eine Direktzugriffskanalressource basierend auf der Benutzerausrüstung und der TAG zugewiesen wird,
wobei der PDCCH-Auftrag ein Downlinksteuerinformationsformat, Downlink Control Information, DCI-Format umfasst, das mit einem temporären Zellenfunknetzidentifikator, Cell-Radio Network Temporary Identifier, C-RNTI, gescramblet wird, und
wobei das DCI-Format mindestens eines von DCI-Format-Differenzierungsflag, lokalisiertem und verteilten virtuellen Ressourcenblock, VRB, Zuweisungsflag, Ressourcenblockzuweisungsbit oder Präambelindex umfasst.

**2.** Verfahren nach Anspruch 1, das ferner Folgendes umfasst:

Empfangen eines anderen PDCCH-Auftrags zum Auslösen einer neuen Direktzugriffsprozedur, während die Direktzugriffsprozedur andauert; und
Durchführen nur einer der neuen Direktzugriffsprozedur und der Direktzugriffsprozedur.

**3.** Verfahren nach Anspruch 2, wobei das Durchführen nur eines umfasst:

Aufgeben der Direktzugriffsprozedur und
Durchführen der neuen Direktzugriffsprozedur basierend auf dem neuen PDCCH-Auftrag.

**4.** Verfahren nach Anspruch 1, wobei der PDCCH-Auftrag über die Zelle der primären TAG empfangen wird und die Serving-Cell die Zelle der sekundären TAG ist.

**5.** Verfahren nach Anspruch 1, das ferner Folgendes umfasst:
Empfangen einer Direktzugriffsantwortmitteilung unter Verwendung eines temporären Direktzugriffs-Funknetzidentifikators, Random Access-Radio Network Temporary Identifier, RA-RNTIs, der dem Direktzugriffskanal zugeordnet ist, der die Direktzugriffspräambel gesendet hat.

**6.** Verfahren für eine Direktzugriffsprozedur zur Verwendung in einem eNodeB (101-103), wobei das Verfahren Folgendes umfasst:

Ermitteln eines Trägerindikatorfeldwertes, um eine Serving-Cell für eine Sendung einer Direktzugriffspräambel einer Benutzerausrüstung (111-116) unter einer Zelle einer primären Zeitvorlaufgruppe, Timing Advance Group, TAG, und einer Zelle einer sekundären TAG anzugeben;
Senden eines Auftrags eines physikalischen Downlinkorganisationskanals, Physical Downlink Control Channel, PDCCH-Auftrags, der den Trägerindikatorfeldwert umfasst, zur Benutzerausrüstung und
Empfangen der Direktzugriffspräambel über die Serving-Cell von der Benutzerausrüstung,
wobei, wenn die Benutzerausrüstung mit mehreren TAG konfiguriert ist, die die primäre TAG und die sekundäre TAG umfassen, der Trägerindikatorfeldwert die Zelle der sekundären TAG als die Serving-Cell für die Sendung der Direktzugriffspräambel angibt und wobei in der Direktzugriffsprozedur eine Direktzugriffskanalressource basierend auf der Benutzerausrüstung und der TAG zugewiesen wird,
wobei der PDCCH-Auftrag ein Downlinksteuerinformationsformat, Downlink Control Information, DCI-Format umfasst, das mit einem temporären Zellenfunknetzidentifikator, Cell-Radio Network Temporary Identifier, C-RNTI, gescramblet wird, und
wobei das DCI-Format mindestens eines von DCI-Format-Differenzierungsflag, lokalisiertem und verteilten virtuellen Ressourcenblock, VRB, Zuweisungsflag, Ressourcenblockzuweisungsbit oder Präambelindex umfasst.

**7.** Verfahren nach Anspruch 6, wobei der PDCCH-Auftrag über die Zelle der primären TAG gesendet wird und die Serving-Cell die Zelle der sekundären TAG ist.

**8.** Verfahren nach Anspruch 6, das ferner Folgendes umfasst:
Senden einer Direktzugriffsantwortmitteilung unter Verwendung eines temporären Direktzugriffs-Funknetzidentifikators, Random Access-Radio Network Temporary Identifier, RA-RNTIs, der dem Direktzugriffskanal zugeordnet ist, der die Direktzugriffspräambel gesendet hat.

**9.** Benutzerausrüstung (111-116), die für eine Direktzugriffsprozedur konfiguriert ist, wobei die Benutzerausrüstung Folgendes umfasst:

einen Sendeempfänger (310), der konfiguriert ist, ein Signal zu senden;
einen Prozessor (340), der konfiguriert ist, einen Auftrag eines physikalischen Downlinkorganisationskanals, Physical Downlink Control Channel, PDCCH-Auftrag, zum Auslösen einer Direktzugriffsprozedur von einem eNodeB (101-103) zu empfangen, wenn die Benutzerausrüstung mit mehreren Zeitvorlaufgruppen, Timing Advance Groups, TAG, konfiguriert ist, die eine primäre TAG und eine sekundäre TAG umfassen, eine Serving-Cell für eine Sendung einer Direktzugriffspräambel unter einer Zelle der primären TAG und einer Zelle der sekundären TAG basierend auf einem Trägerindikatorfeldwert zu ermitteln, der im empfangenen PDCCH-Auftrag beinhaltet ist, und die Direktzugriffsprozedur für die ermittelte Serving-Cell durch Senden der Direktzugriffspräambel über die ermittelte Serving-Cell auszulösen,
wobei der Trägerindikatorfeldwert die Zelle der sekundären TAG als die Serving-Cell für die Sendung der Direktzugriffspräambel angibt und wobei in der Direktzugriffsprozedur eine Direktzugriffskanalressource basierend auf der Benutzerausrüstung und der TAG zugewiesen wird,
wobei der PDCCH-Auftrag ein Downlinksteuerinformationsformat, Downlink Control Information, DCI-Format umfasst, das mit einem temporären Zellenfunknetzidentifikator, Cell-Radio Network Temporary Identifier, C-RNTI, gescramblet wird, und
wobei das DCI-Format mindestens eines von DCI-Format-Differenzierungsflag, lokalisiertem und verteilten virtuellen Ressourcenblock, VRB, Zuweisungsflag, Ressourcenblockzuweisungsbit oder Präambelindex umfasst.

**10.** Benutzerausrüstung nach Anspruch 9, wobei die Benutzerausrüstung ausgelegt ist, ein Verfahren nach einem der Ansprüche 2 bis 5 zu implementieren.

**11.** eNodeB (101-103), der für eine Direktzugriffsprozedur konfiguriert ist, wobei der eNodeB Folgendes umfasst:

einen Sendeempfänger (310), der konfiguriert ist, ein Signal zu senden;
eine Steuerung (340), die konfiguriert ist, einen Trägerindikatorfeldwert zu ermitteln, um eine Serving-Cell für eine Sendung einer Direktzugriffspräambel einer Benutzerausrüstung (111-116) unter einer Zelle einer primären Zeitvorlaufgruppe, Timing Advance Group, TAG, und einer Zelle einer sekundären TAG anzugeben, einen Auftrag eines physikalischen Downlinkorganisationskanals, Physical Downlink Control Channel, PDCCH-Auftrag, der den Trägerindikatorfeldwert umfasst, zur Benutzerausrüstung zu senden und die Direktzugriffspräambel über die Serving-Cell von der Benutzerausrüstung zu empfangen,
wobei, wenn die Benutzerausrüstung mit mehreren TAG konfiguriert ist, die die primäre TAG und die sekundäre TAG umfassen, der Trägerindikatorfeldwert die Zelle der sekundären TAG als die Serving-Cell für die Sendung der Direktzugriffspräambel angibt und wobei in der Direktzugriffsprozedur eine Direktzugriffskanalressource basierend auf der Benutzerausrüstung und der TAG zugewiesen wird,
wobei der PDCCH-Auftrag ein Downlinksteuerinformationsformat, Downlink Control Information, DCI-Format umfasst, das mit einem temporären Zellenfunknetzidentifikator, Cell-Radio Network Temporary Identifier, C-RNTI, gescramblet wird, und
wobei das DCI-Format mindestens eines von DCI-Format-Differenzierungsflag, lokalisiertem und verteilten virtuellen Ressourcenblock, VRB, Zuweisungsflag, Ressourcenblockzuweisungsbit oder Präambelindex umfasst.

**12.** eNodeB nach Anspruch 11, wobei die Benutzerausrüstung ausgelegt ist, ein Verfahren nach einem der Ansprüche 7 bis 8 zu implementieren.

## Revendications

**1.** Procédé pour une procédure d'accès aléatoire dans un équipement d'utilisateur (111-116), comprenant :

la réception d'un ordre de canal de commande de liaison descendante physique, PDCCH, pour lancer une procédure d'accès aléatoire en provenance d'un eNodeB (101-103) ;
si l'équipement d'utilisateur est configuré avec plusieurs groupes d'avance de timing, TAG, comprenant un TAG primaire et un TAG secondaire, la détermination d'une cellule de desserte pour une transmission d'un préambule d'accès aléatoire parmi une cellule du TAG primaire et une cellule du TAG secondaire, sur la base d'une valeur de champ d'indicateur de porteuse incluse dans l'ordre PDCCH reçu ; et
le lancement de la procédure d'accès aléatoire pour la cellule de desserte déterminée par la transmission du préambule d'accès aléatoire sur la cellule de desserte déterminée,
dans lequel la valeur de champ d'indicateur de porteuse indique la cellule du TAG secondaire en tant que la cellule de desserte pour la transmission du préambule d'accès aléatoire, et
dans lequel, dans la procédure d'accès aléatoire, une ressource de canal d'accès aléatoire est assignée sur la base de l'équipement d'utilisateur et du TAG,
dans lequel l'ordre PDCCH comprend un format d'informations de commande de liaison descendante, DCI, brouillé avec un identifiant temporaire de réseau radio de cellule, C-RNTI, et
dans lequel le format DCI comprend au moins l'un d'un drapeau de différenciation de format DCI, un drapeau d'assignation de bloc de ressources virtuelles, VRB, localisé et distribué, un bit d'assignation de bloc de ressources ou un indice de préambule.

**2.** Procédé selon la revendication 1, comprenant en outre :

la réception d'un autre ordre PDCCH pour lancer une nouvelle procédure d'accès aléatoire pendant que la procédure d'accès aléatoire est en cours ; et
l'exécution uniquement de l'une de la nouvelle procédure d'accès aléatoire et de la procédure d'accès aléatoire.

**3.** Procédé selon la revendication 2, dans lequel l'exécution uniquement de l'une comprend :

l'abandon de la procédure d'accès aléatoire ; et
l'exécution de la nouvelle procédure d'accès aléatoire sur la base du nouvel ordre PDCCH.

**4.** Procédé selon la revendication 1, dans lequel l'ordre PDCCH est reçu sur la cellule du TAG primaire, et la cellule de desserte est la cellule du TAG secondaire.

**5.** Procédé selon la revendication 1, comprenant en outre :
la réception d'un message de réponse d'accès aléatoire en utilisant un identifiant temporaire de réseau radio d'accès aléatoire, RA-RNTI, associé à un canal d'accès aléatoire qui transmet le préambule d'accès aléatoire.

**6.** Procédé pour une procédure d'accès aléatoire pour une utilisation dans un eNodeB (101-103), le procédé comprenant :

la détermination d'une valeur de champ d'indicateur de porteuse pour indiquer une cellule de desserte pour une transmission d'un préambule d'accès aléatoire d'un équipement d'utilisateur (111-116) parmi une cellule d'un groupe d'avance de timing, TAG, primaire et une cellule d'un TAG secondaire ;
la transmission d'un ordre de canal de commande de liaison descendante physique, PDCCH, comprenant la valeur de champ d'indicateur de porteuse à destination de l'équipement d'utilisateur ; et
la réception, en provenance de l'équipement d'utilisateur, du préambule d'accès aléatoire sur la cellule de desserte,
dans lequel, si l'équipement d'utilisateur est configuré avec plusieurs TAG comprenant le TAG primaire et le TAG secondaire, la valeur de champ d'indicateur de porteuse indique la cellule du TAG secondaire en tant que la cellule de desserte pour la transmission du préambule d'accès aléatoire, et
dans lequel, dans la procédure d'accès aléatoire, une ressource de canal d'accès aléatoire est assignée sur la base de l'équipement d'utilisateur et du TAG,
dans lequel l'ordre PDCCH comprend un format d'informations de commande de liaison descendante, DCI, brouillé avec un identifiant temporaire de réseau radio de cellule, C-RNTI, et
dans lequel le format DCI comprend au moins l'un d'un drapeau de différenciation de format DCI, un drapeau d'assignation de bloc de ressources virtuelles, VRB, localisé et distribué, un bit d'assignation de bloc de ressources ou un indice de préambule.

**7.** Procédé selon la revendication 6, dans lequel l'ordre PDCCH est transmis sur la cellule du TAG primaire, et la cellule de desserte est la cellule du TAG secondaire.

**8.** Procédé selon la revendication 6, comprenant en outre :
la transmission d'un message de réponse d'accès aléatoire en utilisant un identifiant temporaire de réseau radio d'accès aléatoire, RA-RNTI, associé à un canal d'accès aléatoire qui transmet le préambule d'accès aléatoire.

**9.** Equipement d'utilisateur (111-116) configuré pour une procédure d'accès aléatoire, l'équipement d'utilisateur comprenant :

un émetteur-récepteur (310) configuré pour effectuer la transmission d'un signal ;
un processeur (340) configuré pour effectuer la réception d'un ordre de canal de commande de liaison descendante physique, PDCCH, pour lancer une procédure d'accès aléatoire en provenance d'un eNodeB (101-103) ; si l'équipement d'utilisateur est configuré avec plusieurs groupes d'avance de timing, TAG, comprenant un TAG primaire et un TAG secondaire, la détermination d'une cellule de desserte pour une transmission d'un préambule d'accès aléatoire parmi une cellule du TAG primaire et une cellule du TAG secondaire, sur la base d'une valeur de champ d'indicateur de porteuse incluse dans l'ordre PDCCH reçu ; et le lancement de la procédure d'accès aléatoire pour la cellule de desserte déterminée par la transmission du préambule d'accès aléatoire sur la cellule de desserte déterminée,
dans lequel la valeur de champ d'indicateur de porteuse indique la cellule du TAG secondaire en tant que la cellule de desserte pour la transmission du préambule d'accès aléatoire, et
dans lequel, dans la procédure d'accès aléatoire, une ressource de canal d'accès aléatoire est assignée sur la base de l'équipement d'utilisateur et du TAG,
dans lequel l'ordre PDCCH comprend un format d'informations de commande de liaison descendante, DCI, brouillé avec un identifiant temporaire de réseau radio de cellule, C-RNTI, et
dans lequel le format DCI comprend au moins l'un d'un drapeau de différenciation de format DCI, un drapeau d'assignation de bloc de ressources virtuelles, VRB, localisé et distribué, un bit d'assignation de bloc de ressources ou un indice de préambule.

**10.** Equipement d'utilisateur selon la revendication 9, dans lequel l'équipement d'utilisateur est agencé pour mettre en oeuvre un procédé selon l'une des revendications 2 à 5.

**11.** eNodeB (101-103) configuré pour une procédure d'accès aléatoire, l'eNodeB comprenant :

un émetteur-récepteur (310) configuré pour effectuer la transmission d'un signal ;
un organe de commande (340) configuré pour effectuer la détermination d'une valeur de champ d'indicateur de porteuse pour indiquer une cellule de desserte pour une transmission d'un préambule d'accès aléatoire d'un équipement d'utilisateur (111-116) parmi une cellule d'un groupe d'avance de timing, TAG, primaire et une cellule d'un TAG secondaire ; la transmission d'un ordre de canal de commande de liaison descendante physique, PDCCH, comprenant la valeur de champ d'indicateur de porteuse à destination de l'équipement d'utilisateur ; et la réception, en provenance de l'équipement d'utilisateur, du préambule d'accès aléatoire sur la cellule de desserte,
dans lequel, si l'équipement d'utilisateur est configuré avec plusieurs TAG comprenant le TAG primaire et le TAG secondaire, la valeur de champ d'indicateur de porteuse indique la cellule du TAG secondaire en tant que la cellule de desserte pour la transmission du préambule d'accès aléatoire, et
dans lequel, dans la procédure d'accès aléatoire, une ressource de canal d'accès aléatoire est assignée sur la base de l'équipement d'utilisateur et du TAG,
dans lequel l'ordre PDCCH comprend un format d'informations de commande de liaison descendante, DCI, brouillé avec un identifiant temporaire de réseau radio de cellule, C-RNTI, et
dans lequel le format DCI comprend au moins l'un d'un drapeau de différenciation de format DCI, un drapeau d'assignation de bloc de ressources virtuelles, VRB, localisé et distribué, un bit d'assignation de bloc de ressources ou un indice de préambule.

**12.** eNodeB selon la revendication 11, dans lequel l'équipement d'utilisateur est agencé pour mettre en oeuvre procédé selon l'une des revendications 7 et 8.

[Fig. 1]

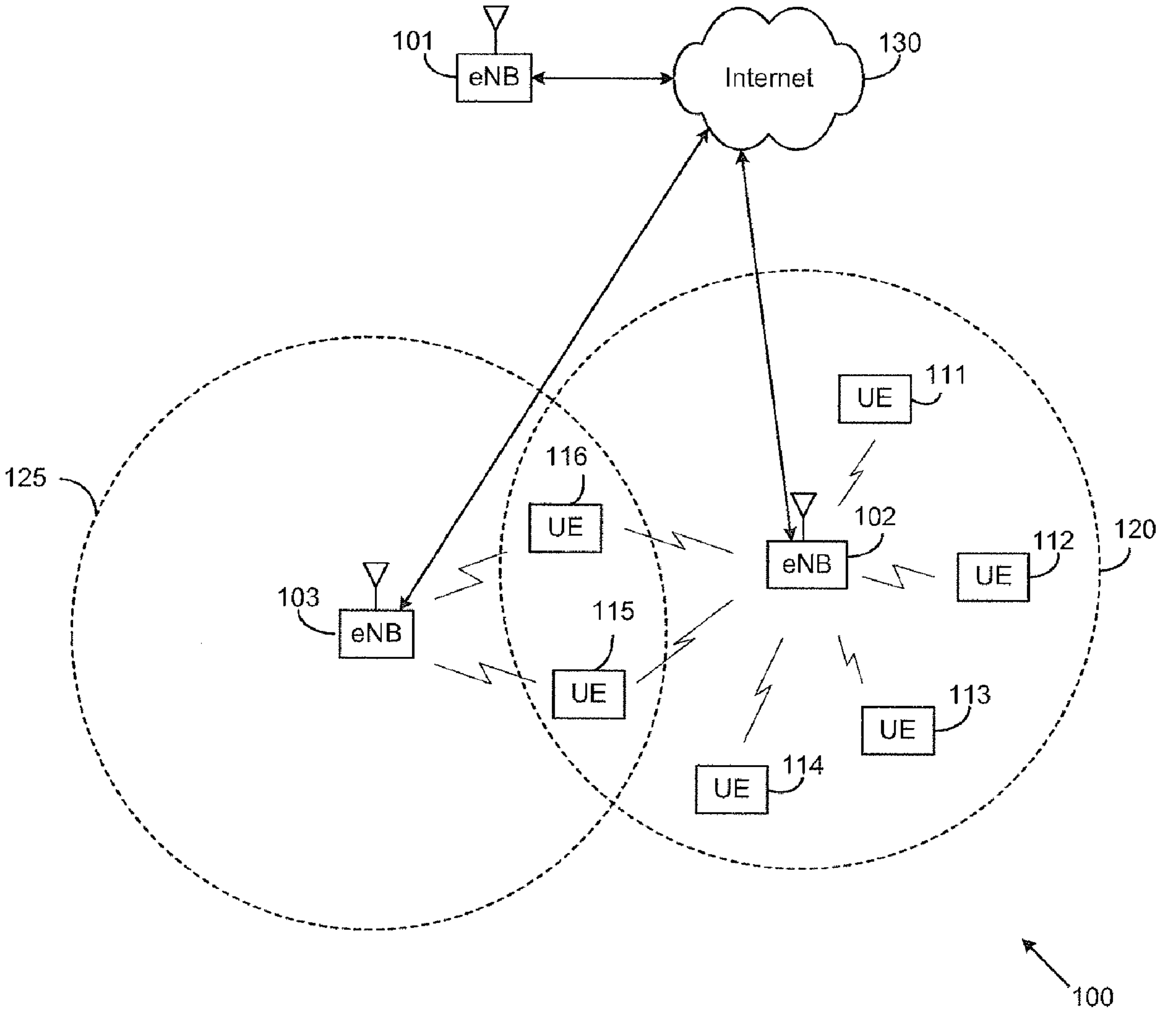
101
eNB
Internet
130
UE
111
125
116
UE
102
120
112
eNB
UE
103
115
eNB
UE
113
UE
UE
114
100

[Fig. 2]

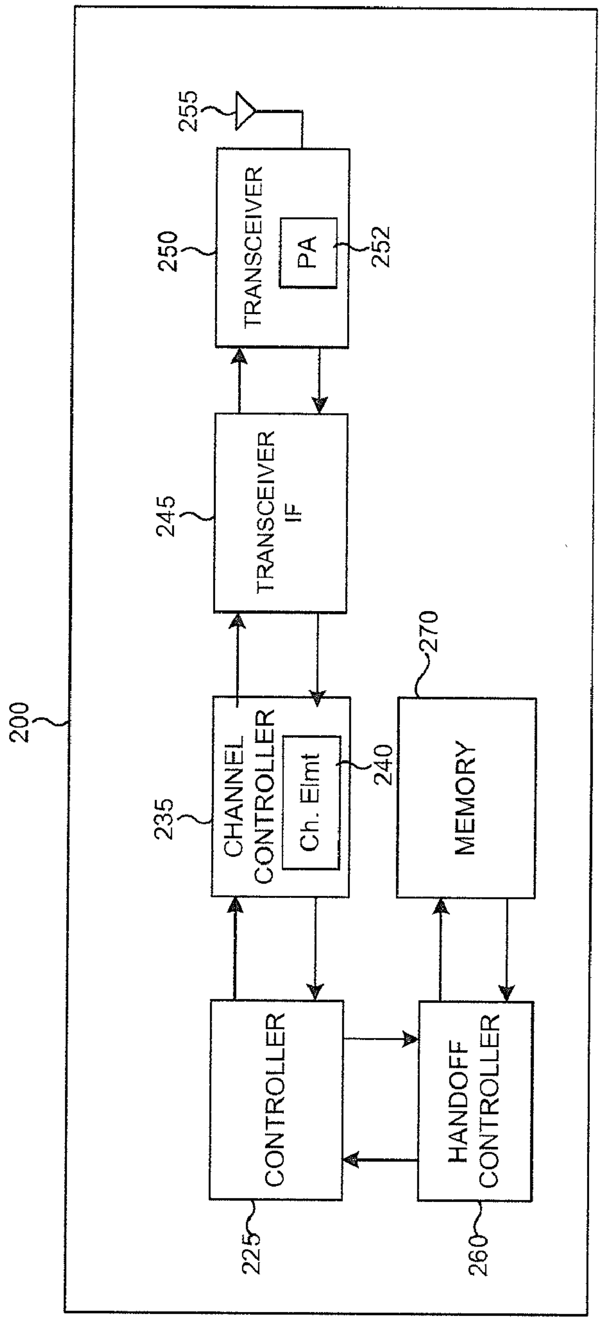
200
255
250
TRANSCEIVER
PA
252
245
TRANSCEIVER
IF
235
CHANNEL
CONTROLLER
Ch. Elmt
240
270
MEMORY
CONTROLLER
225
HANDOFF
CONTROLLER
260

[Fig. 3]

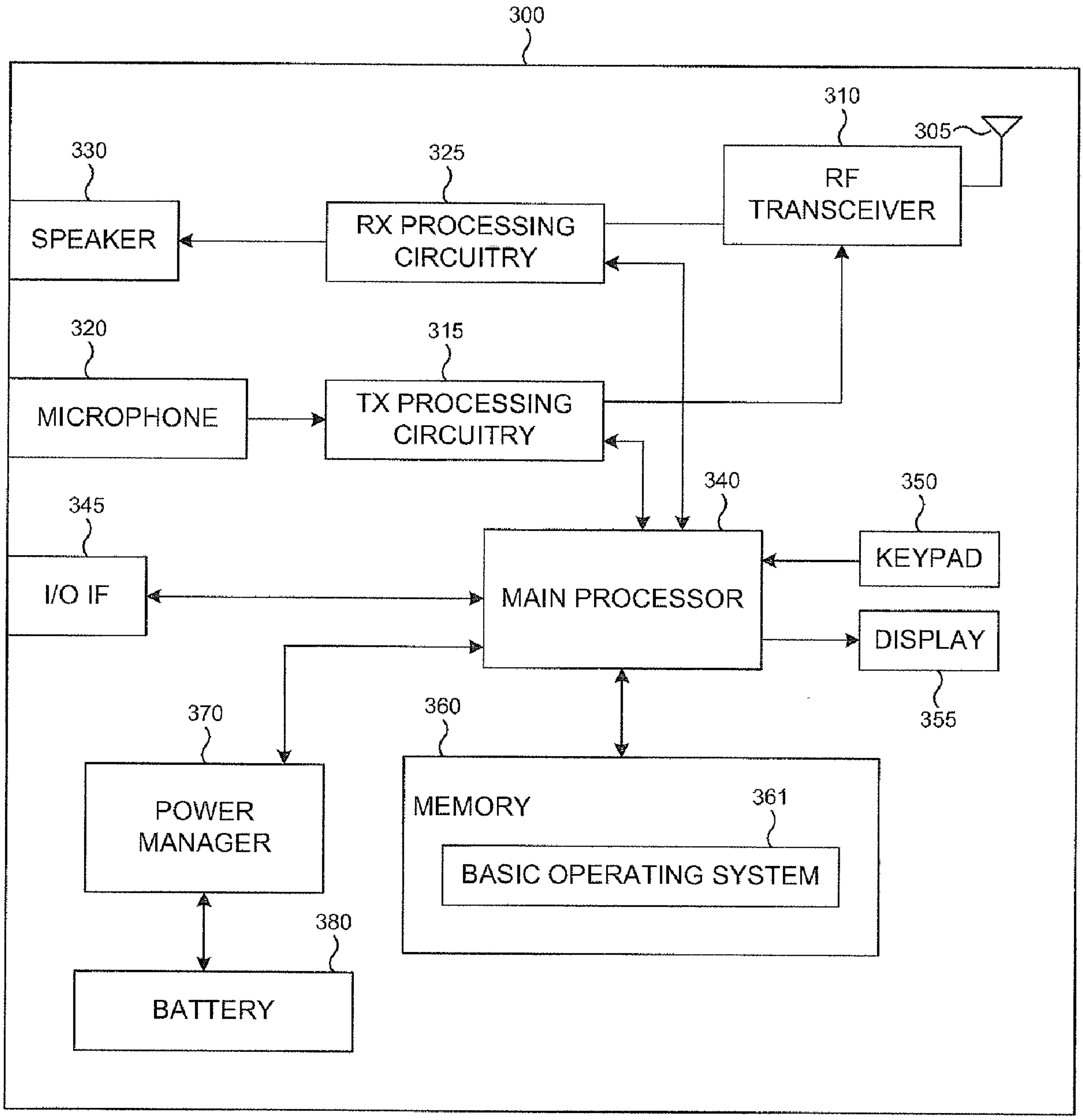
300
310
305
330
325
SPEAKER
RX PROCESSING CIRCUITRY
RF TRANSCEIVER
320
315
MICROPHONE
TX PROCESSING CIRCUITRY
345
340
350
I/O IF
MAIN PROCESSOR
KEYPAD
DISPLAY
355
370
360
POWER MANAGER
MEMORY
361
BASIC OPERATING SYSTEM
380
BATTERY

[Fig. 4]

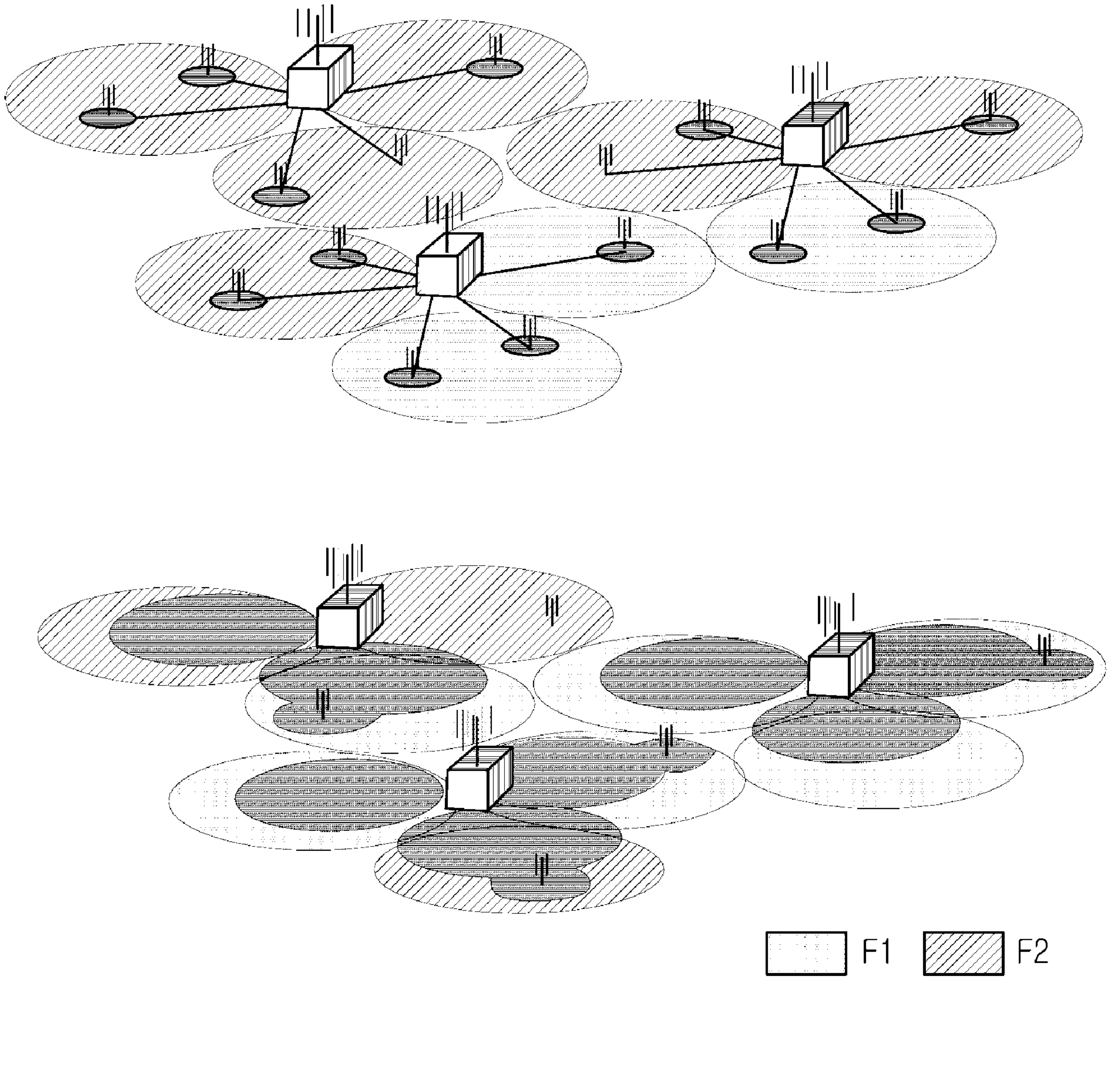

[Fig. 5a]

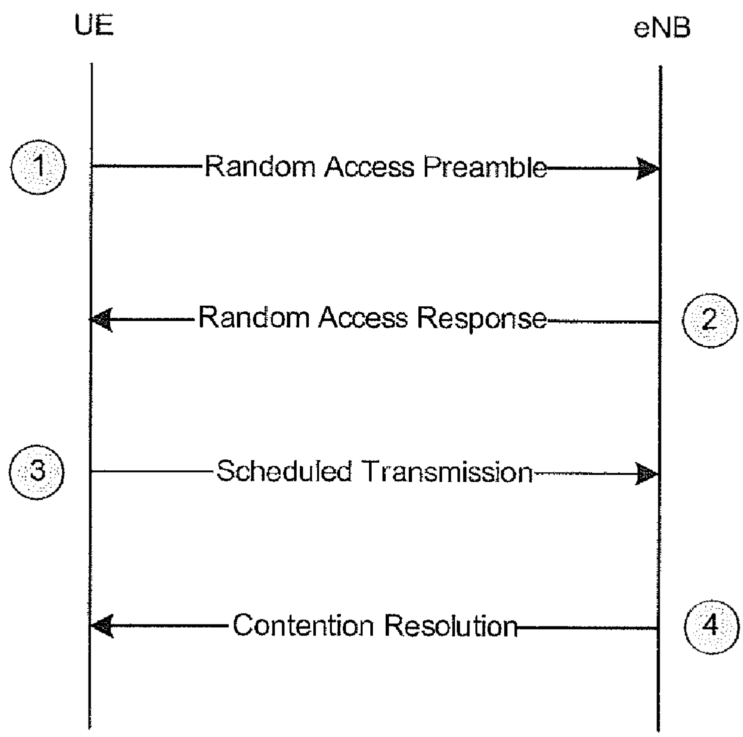
UE
eNB
1
Random Access Preamble
Random Access Response
2
3
Scheduled Transmission
Contention Resolution
4

[Fig. 5b]

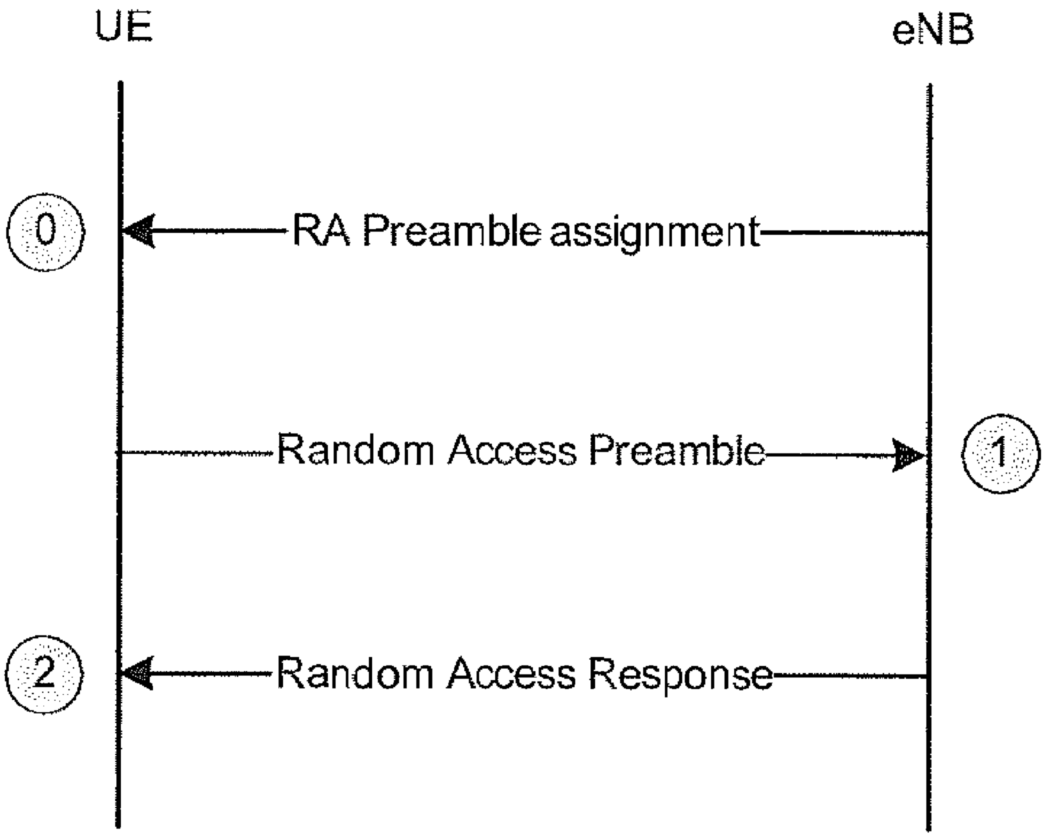
UE
eNB
0
RA Preamble assignment
Random Access Preamble
1
2
Random Access Response

[Fig. 5c]

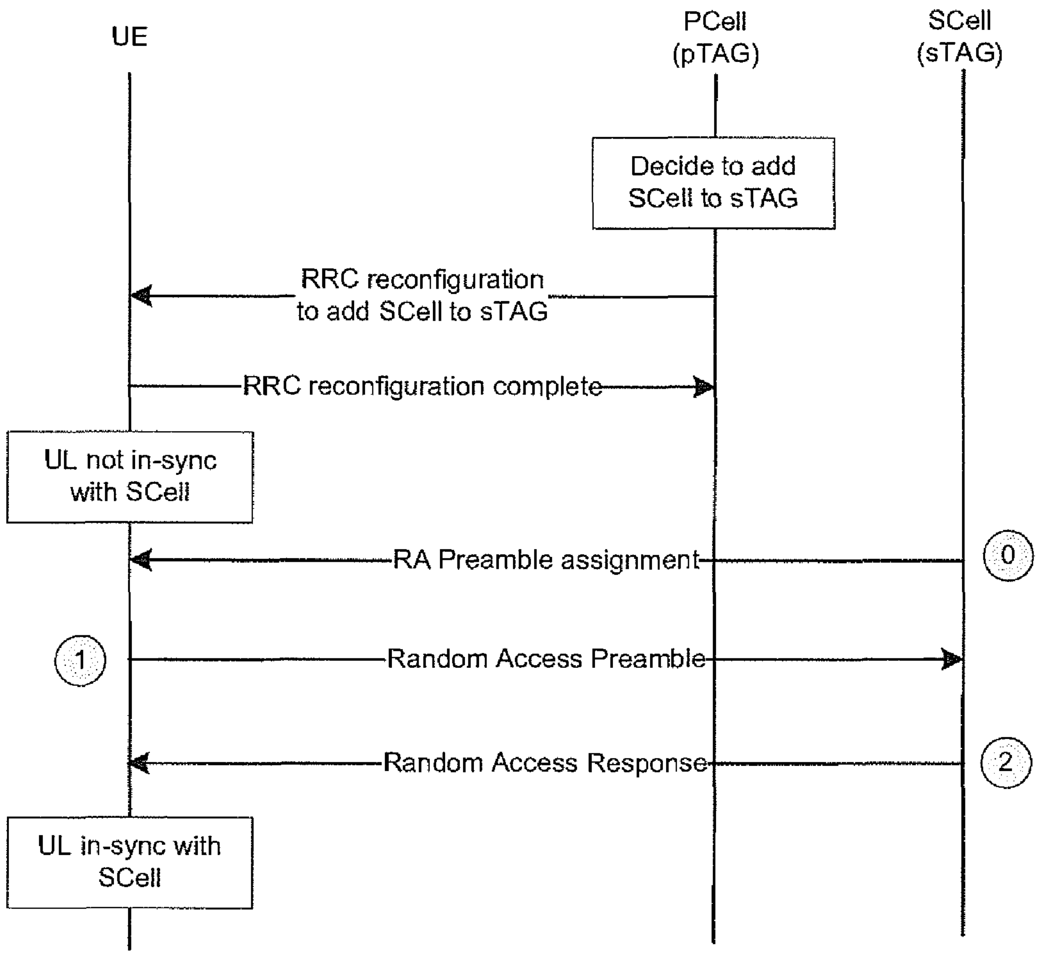
UE
PCell (pTAG)
SCell (sTAG)
Decide to add SCell to sTAG
RRC reconfiguration to add SCell to sTAG
RRC reconfiguration complete
UL not in-sync with SCell
RA Preamble assignment
0
1
Random Access Preamble
Random Access Response
2
UL in-sync with SCell

[Fig. 5d]

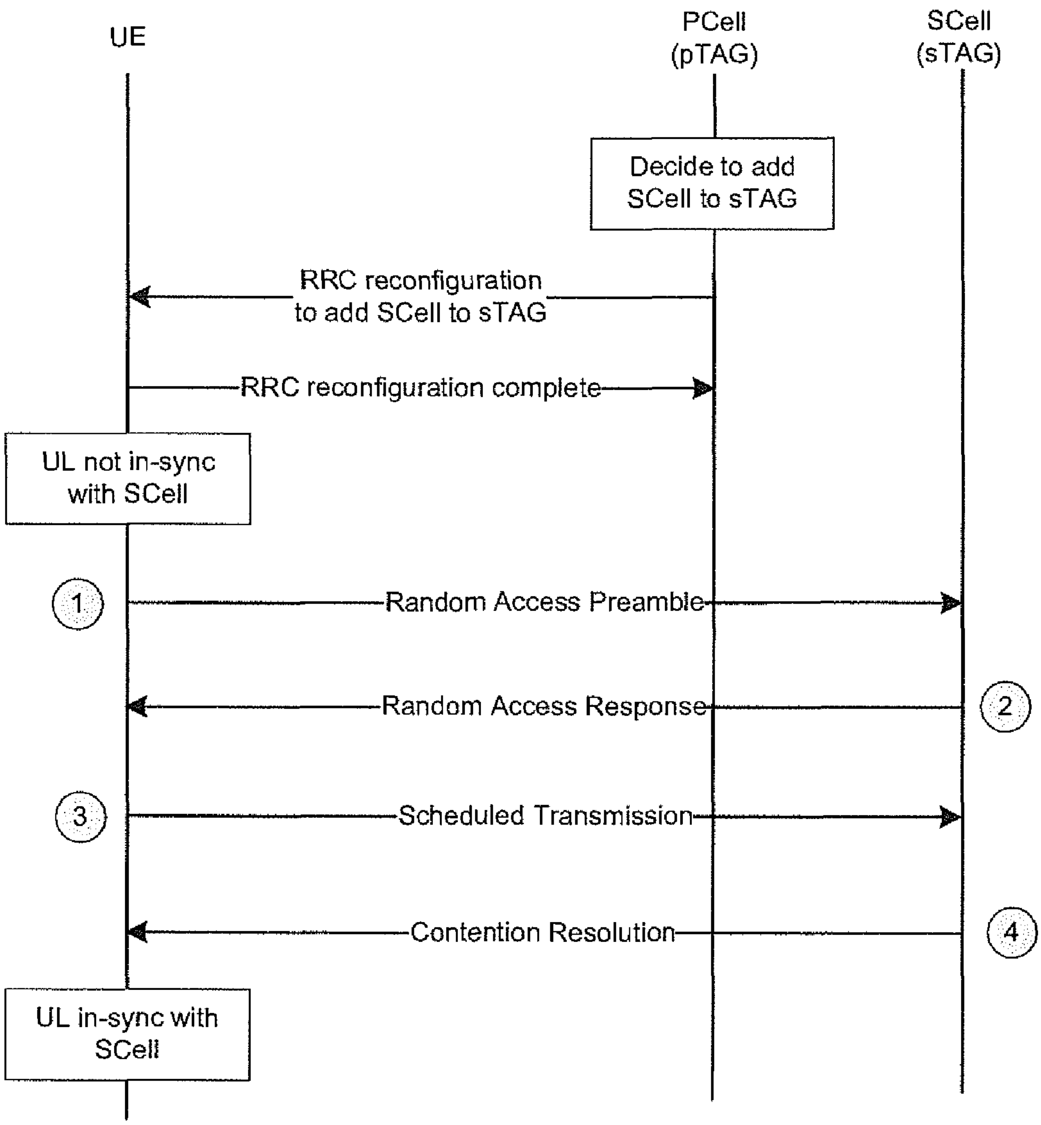
UE
PCell (pTAG)
SCell (sTAG)
Decide to add SCell to sTAG
RRC reconfiguration to add SCell to sTAG
RRC reconfiguration complete
UL not in-sync with SCell
1
Random Access Preamble
Random Access Response
2
3
Scheduled Transmission
Contention Resolution
4
UL in-sync with SCell

[Fig. 5e]

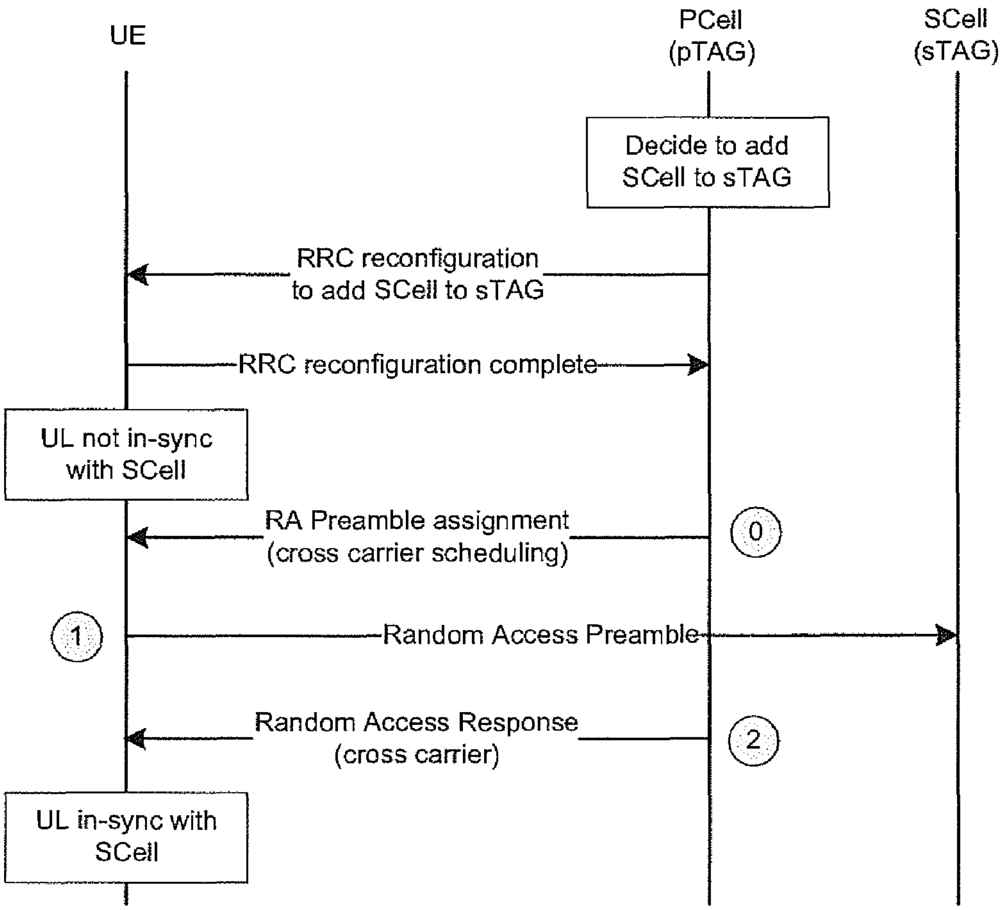
UE
PCell
(pTAG)
SCell
(sTAG)
Decide to add SCell to sTAG
RRC reconfiguration to add SCell to sTAG
RRC reconfiguration complete
UL not in-sync with SCell
RA Preamble assignment (cross carrier scheduling)
0
1
Random Access Preamble
Random Access Response (cross carrier)
2
UL in-sync with SCell

[Fig. 5f]

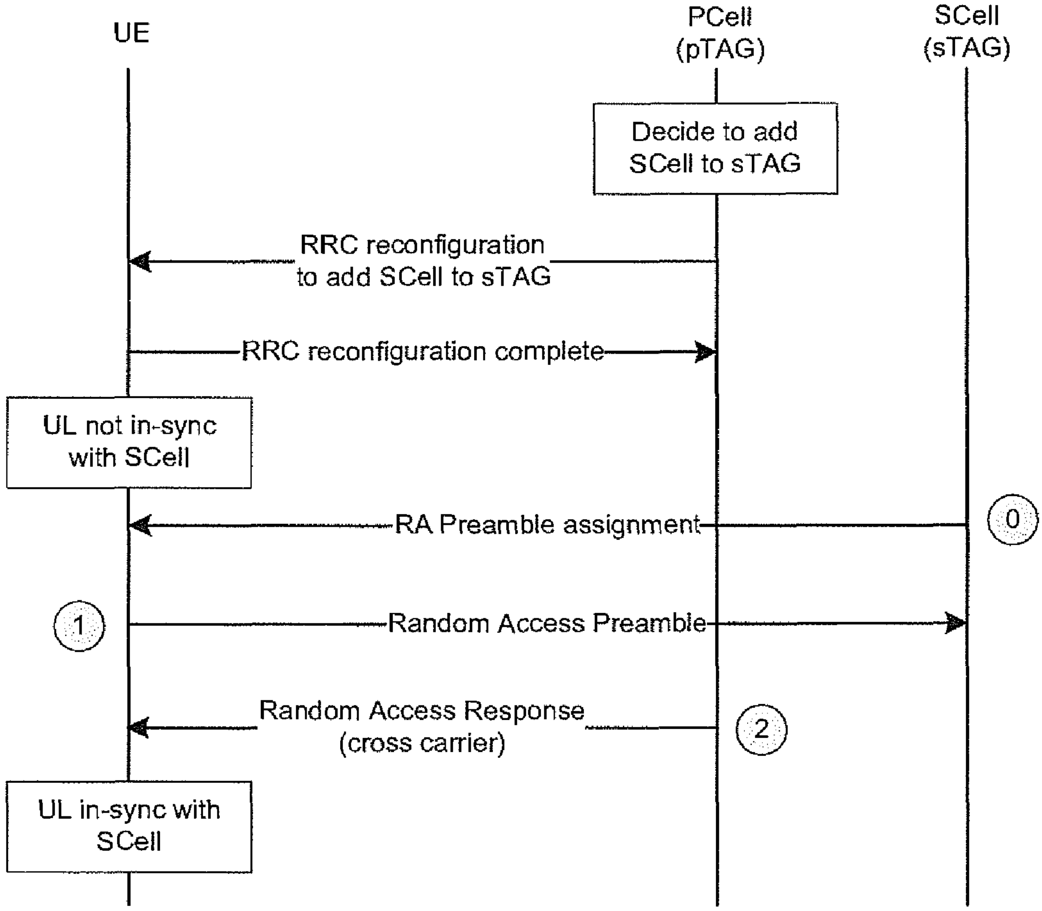
UE
PCell (pTAG)
SCell (sTAG)
Decide to add SCell to sTAG
RRC reconfiguration to add SCell to sTAG
RRC reconfiguration complete
UL not in-sync with SCell
RA Preamble assignment
0
1
Random Access Preamble
Random Access Response (cross carrier)
2
UL in-sync with SCell

[Fig. 6a]

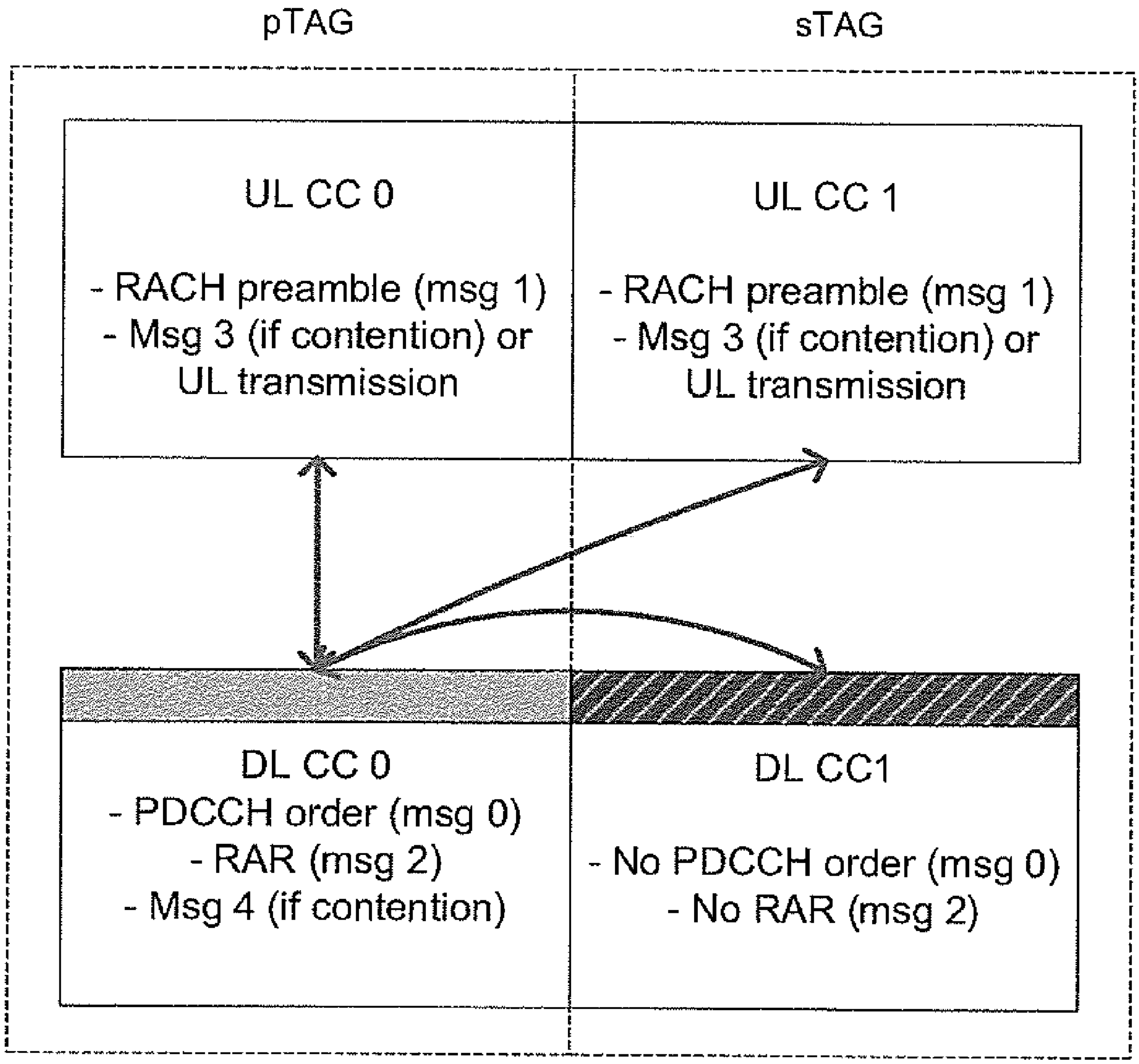
pTAG
sTAG
UL CC 0
- RACH preamble (msg 1)
- Msg 3 (if contention) or
UL transmission
UL CC 1
- RACH preamble (msg 1)
- Msg 3 (if contention) or
UL transmission
DL CC 0
- PDCCH order (msg 0)
- RAR (msg 2)
- Msg 4 (if contention)
DL CC1
- No PDCCH order (msg 0)
- No RAR (msg 2)

[Fig. 6b]

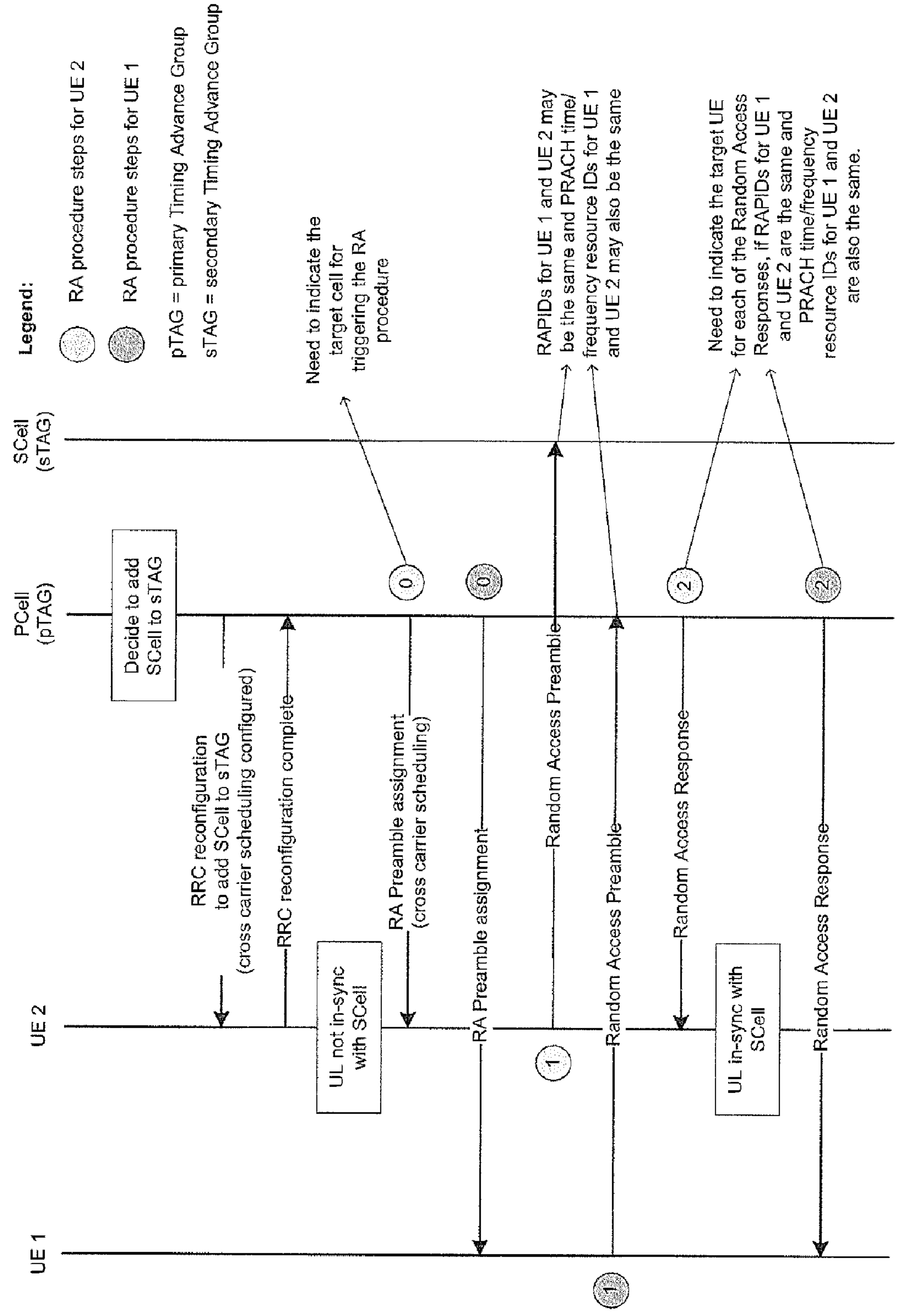
UE 1
UE 2
PCell (pTAG)
SCell (sTAG)
Legend:
RA procedure steps for UE 2
RA procedure steps for UE 1
pTAG = primary Timing Advance Group
sTAG = secondary Timing Advance Group
Decide to add SCell to sTAG
RRC reconfiguration to add SCell to sTAG (cross carrier scheduling configured)
RRC reconfiguration complete
UL not in-sync with SCell
RA Preamble assignment (cross carrier scheduling)
RA Preamble assignment
Random Access Preamble
Random Access Preamble
Random Access Response
UL in-sync with SCell
Random Access Response
Need to indicate the target cell for triggering the RA procedure
RAPIDs for UE 1 and UE 2 may be the same and PRACH time/frequency resource IDs for UE 1 and UE 2 may also be the same
Need to indicate the target UE for each of the Random Access Responses, if RAPIDs for UE 1 and UE 2 are the same and PRACH time/frequency resource IDs for UE 1 and UE 2 are also the same.
0
0
1
1
2
2

[Fig. 7a]

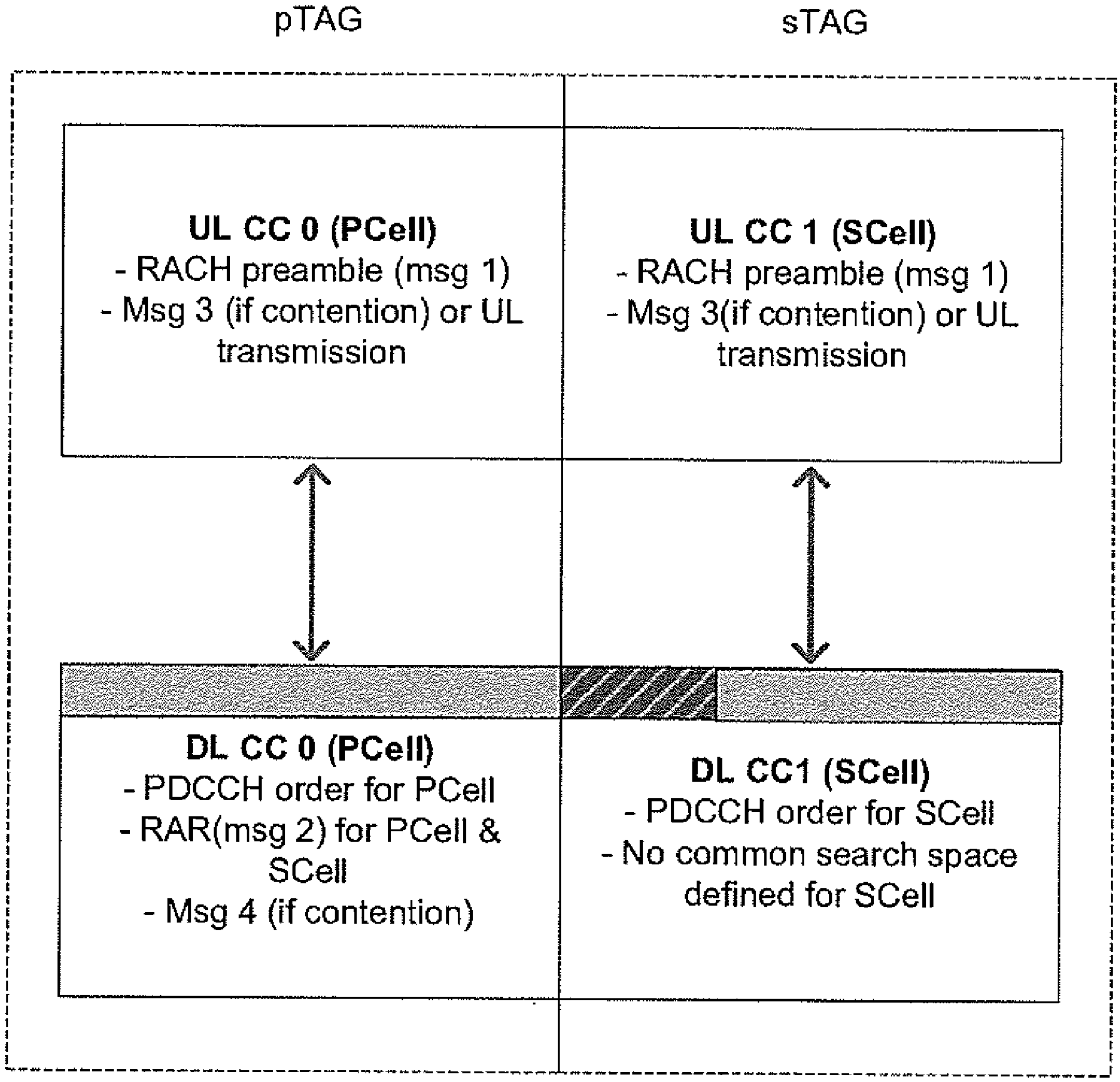
pTAG
sTAG
UL CC 0 (PCell)
- RACH preamble (msg 1)
- Msg 3 (if contention) or UL transmission
UL CC 1 (SCell)
- RACH preamble (msg 1)
- Msg 3(if contention) or UL transmission
DL CC 0 (PCell)
- PDCCH order for PCell
- RAR(msg 2) for PCell & SCell
- Msg 4 (if contention)
DL CC1 (SCell)
- PDCCH order for SCell
- No common search space defined for SCell

[Fig. 7b]

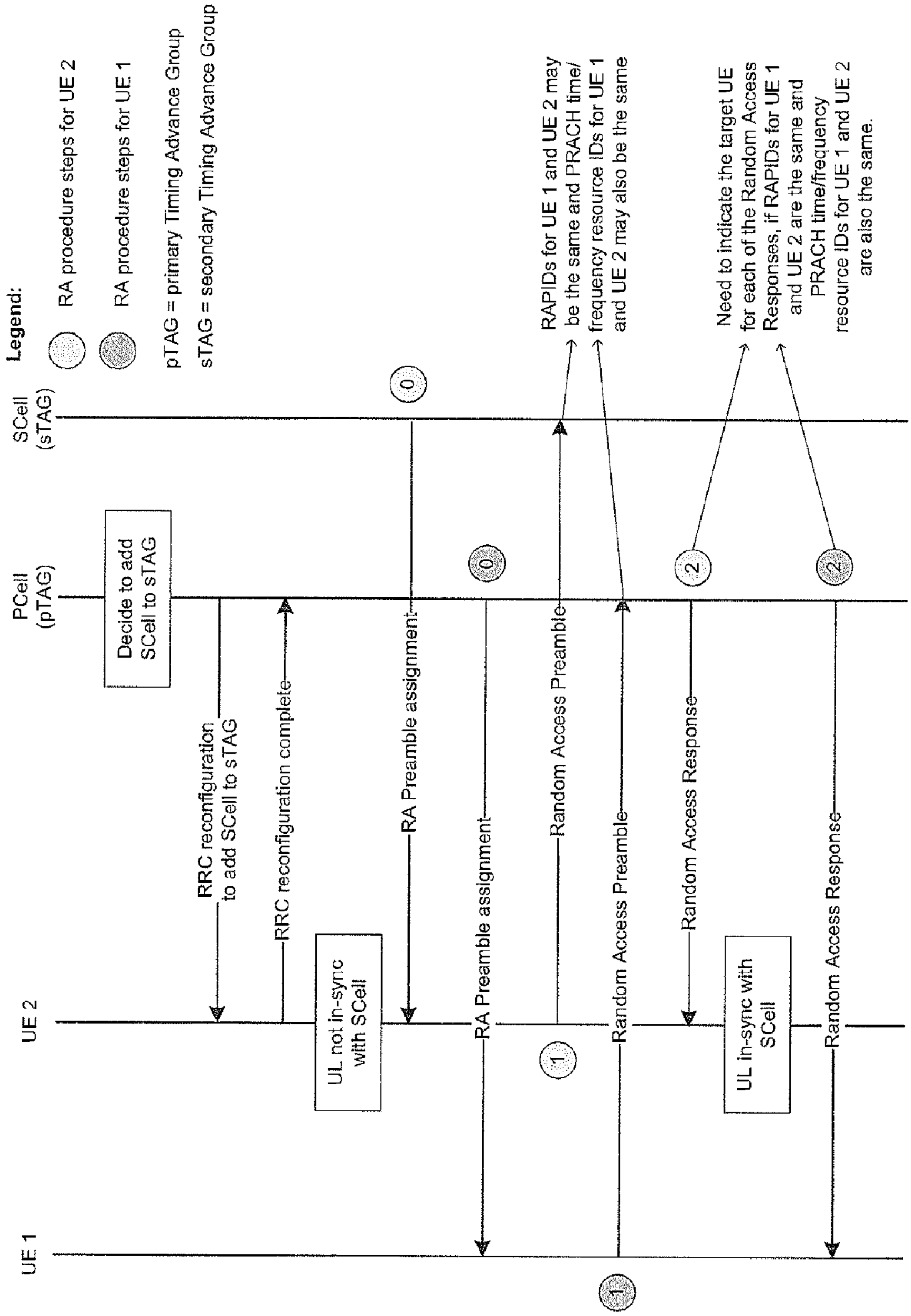
UE 1
UE 2
PCell (pTAG)
SCell (sTAG)
Legend:
RA procedure steps for UE 2
RA procedure steps for UE 1
pTAG = primary Timing Advance Group
sTAG = secondary Timing Advance Group
Decide to add SCell to sTAG
RRC reconfiguration to add SCell to sTAG
RRC reconfiguration complete
UL not in-sync with SCell
RA Preamble assignment
RA Preamble assignment
Random Access Preamble
Random Access Preamble
Random Access Response
UL in-sync with SCell
Random Access Response
RAPIDs for UE 1 and UE 2 may be the same and PRACH time/ frequency resource IDs for UE 1 and UE 2 may also be the same
Need to indicate the target UE for each of the Random Access Responses, if RAPIDs for UE 1 and UE 2 are the same and PRACH time/frequency resource IDs for UE 1 and UE 2 are also the same.
0
0
1
1
2
2

[Fig. 8]

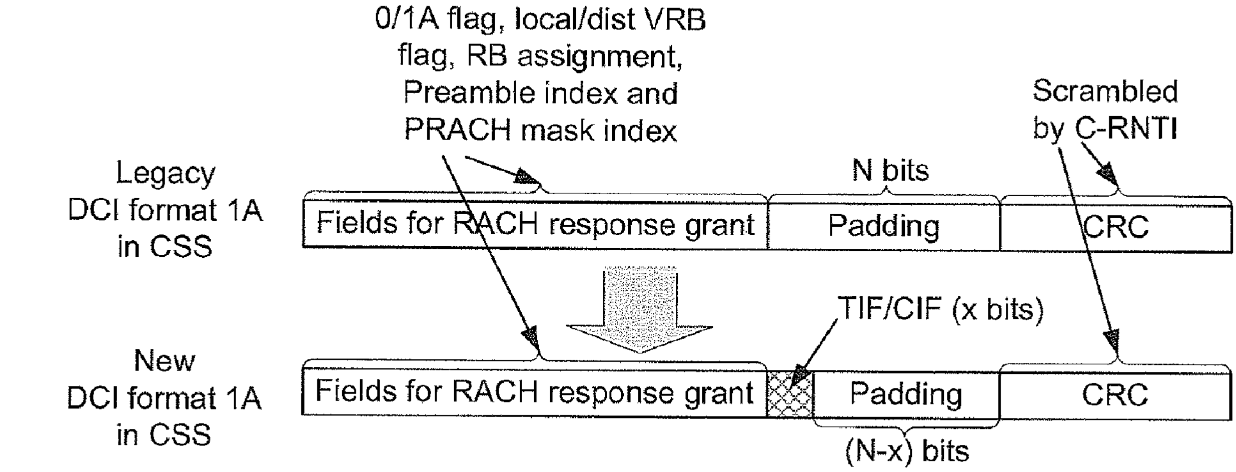
0/1A flag, local/dist VRB flag, RB assignment, Preamble index and PRACH mask index
Scrambled by C-RNTI
N bits
Legacy DCI format 1A in CSS
Fields for RACH response grant
Padding
CRC
TIF/CIF (x bits)
New DCI format 1A in CSS
Fields for RACH response grant
Padding
CRC
(N-x) bits

A

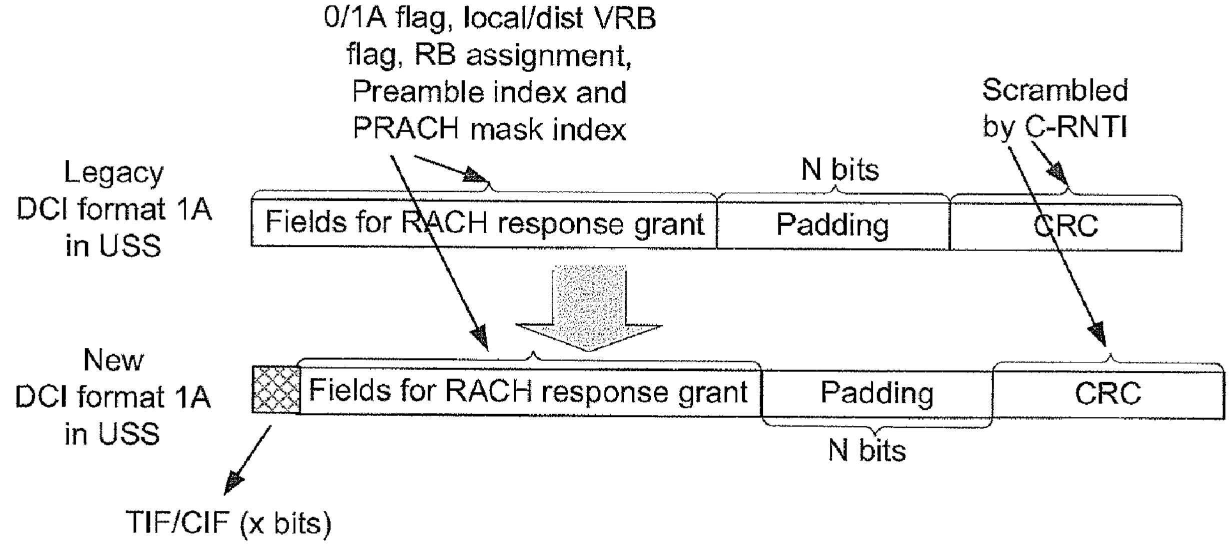
0/1A flag, local/dist VRB flag, RB assignment, Preamble index and PRACH mask index
Scrambled by C-RNTI
N bits
Legacy DCI format 1A in USS
Fields for RACH response grant
Padding
CRC
New DCI format 1A in USS
Fields for RACH response grant
Padding
CRC
N bits
TIF/CIF (x bits)

B

[Fig. 9]

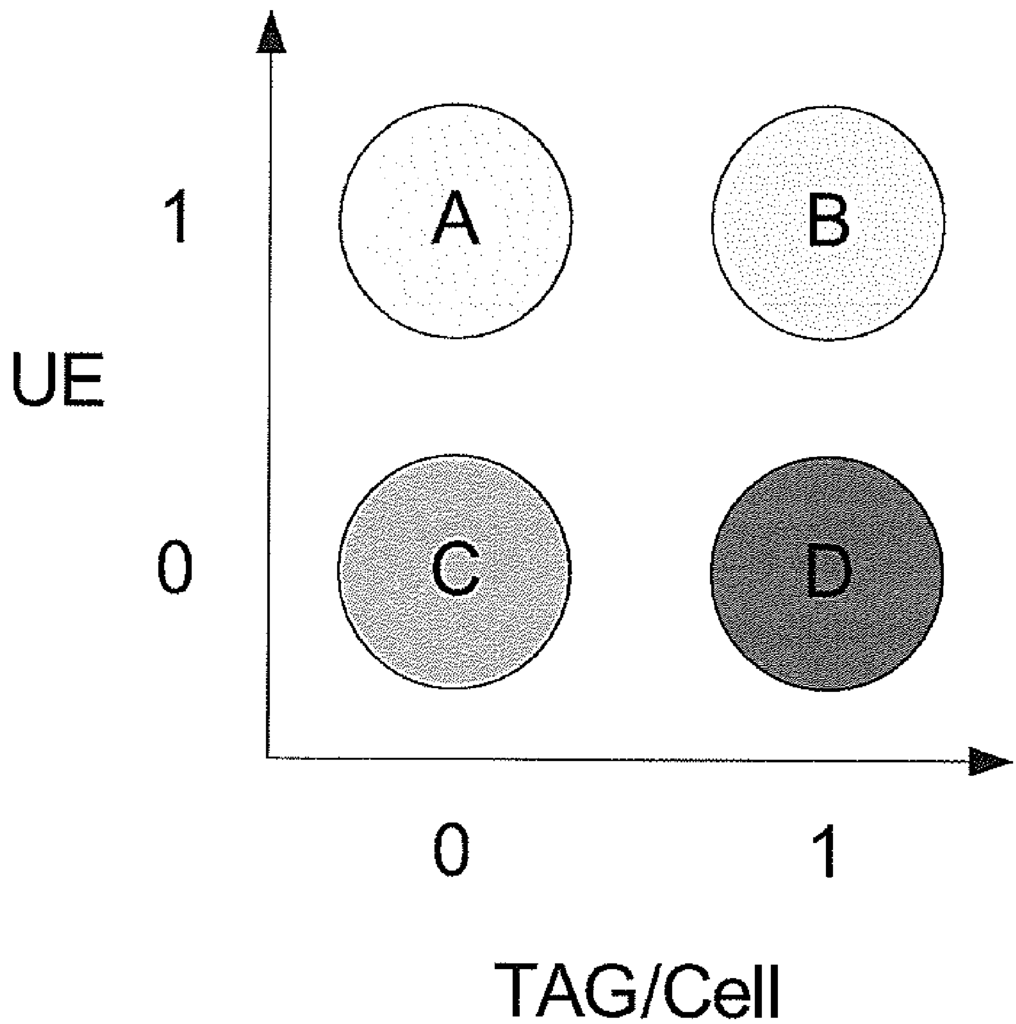

[Fig. 10]

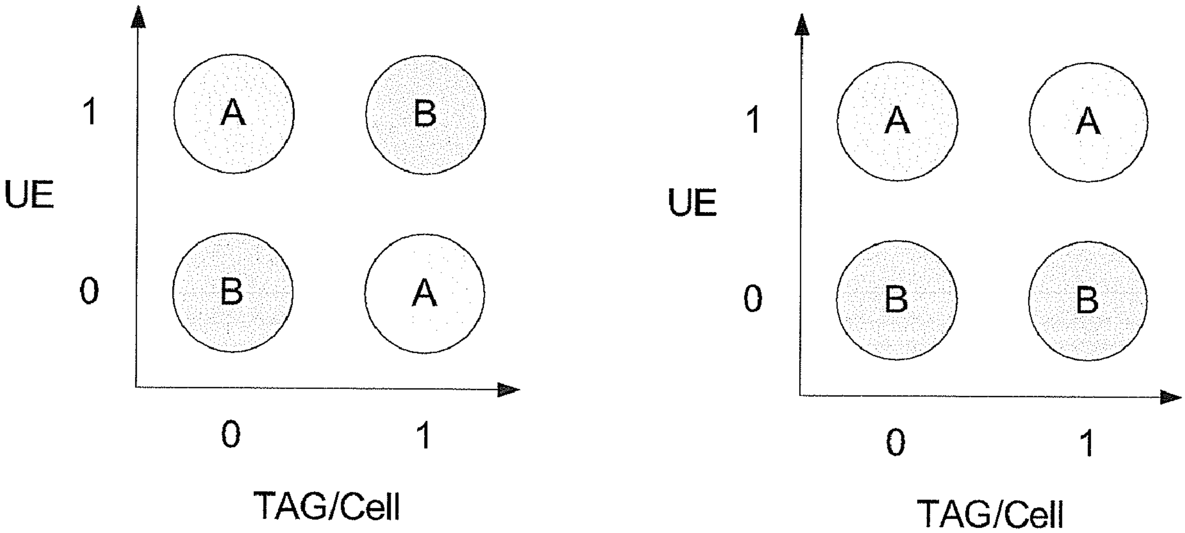

[Fig. 11]

```
PhysicalConfigDedicatedSCell-r10 ::=     SEQUENCE {
    -- DL configuration as well as configuration applicable for DL and UL
    nonUL-Configuration-r10                     SEQUENCE {
       antennaInfo-r10                             AntennaInfoDedicated-r10  OPTIONAL,   -- Need ON
       crossCarrierSchedulingConfig-r10         CrossCarrierSchedulingConfig-r10 OPTIONAL,   -- Need ON
       csi-RS-Config-r10                        CSI-RS-Config-r10          OPTIONAL,   -- Need ON
       pdsch-ConfigDedicated-r10                PDSCH-ConfigDedicated      OPTIONAL    -- Need ON
    }                                                                 OPTIONAL, -- Cond SCellAdd
    -- UL configuration
    ul-Configuration-r10                     SEQUENCE {
       antennaInfoUL-r10                        AntennaInfoUL-r10          OPTIONAL,   -- Need ON
       pusch-ConfigDedicatedSCell-r10              PUSCH-ConfigDedicatedSCell-r10       OPTIONAL,    -- Need ON
        uplinkPowerControlDedicatedSCell-r10 UplinkPowerControlDedicatedSCell-r10 OPTIONAL,       -- Need ON
       cqi-ReportConfigSCell-r10                CQI-ReportConfigSCell-r10 OPTIONAL,   -- Need ON
       soundingRS-UL-ConfigDedicated-r10           SoundingRS-UL-ConfigDedicated OPTIONAL,   -- Need ON
       soundingRS-UL-ConfigDedicated-v1020
                                    SoundingRS-UL-ConfigDedicated-v1020  OPTIONAL,      -- Need ON
       soundingRS-UL-ConfigDedicatedAperiodic-r10
                                    SoundingRS-UL-ConfigDedicatedAperiodic-r10  OPTIONAL    -- Need ON
    }                                                                   OPTIONAL,   -- Cond CommonUL
    ...,
    [[  crossCarrierSchedulingConfig-v11x0          CrossCarrierSchedulingConfig-v11x0   OPTIONAL -- Cond CCS
    ]]
}
```

| Conditional Presence | Explanation |
|---|---|
| CCS | The field is optionally present, need OR, if *crossCarrierSchedulingConfig* is included and if its field *schedulingCellInfo* is set to *other* and if the SCell is configured with PRACH parameters; otherwise the field is not present and the UE shall delete any existing value for this field. |

```
-- ASN1START

CrossCarrierSchedulingConfig-v11x0 ::=          SEQUENCE {
    ra-rnti-offset        INTEGER (1..7)
}

-- ASN1STOP
```

[Fig. 12]

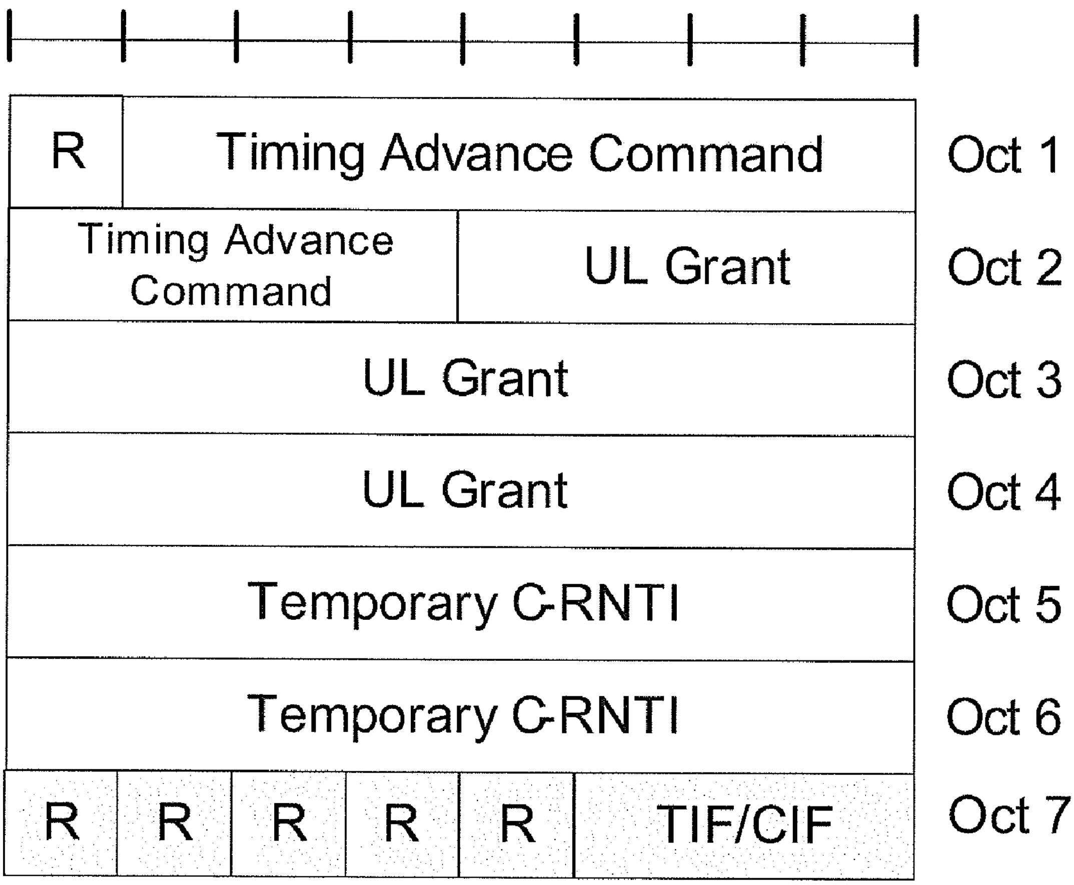
R
Timing Advance Command
Oct 1
Timing Advance Command
UL Grant
Oct 2
UL Grant
Oct 3
UL Grant
Oct 4
Temporary C-RNTI
Oct 5
Temporary C-RNTI
Oct 6
R
R
R
R
R
TIF/CIF
Oct 7

[Fig. 13]

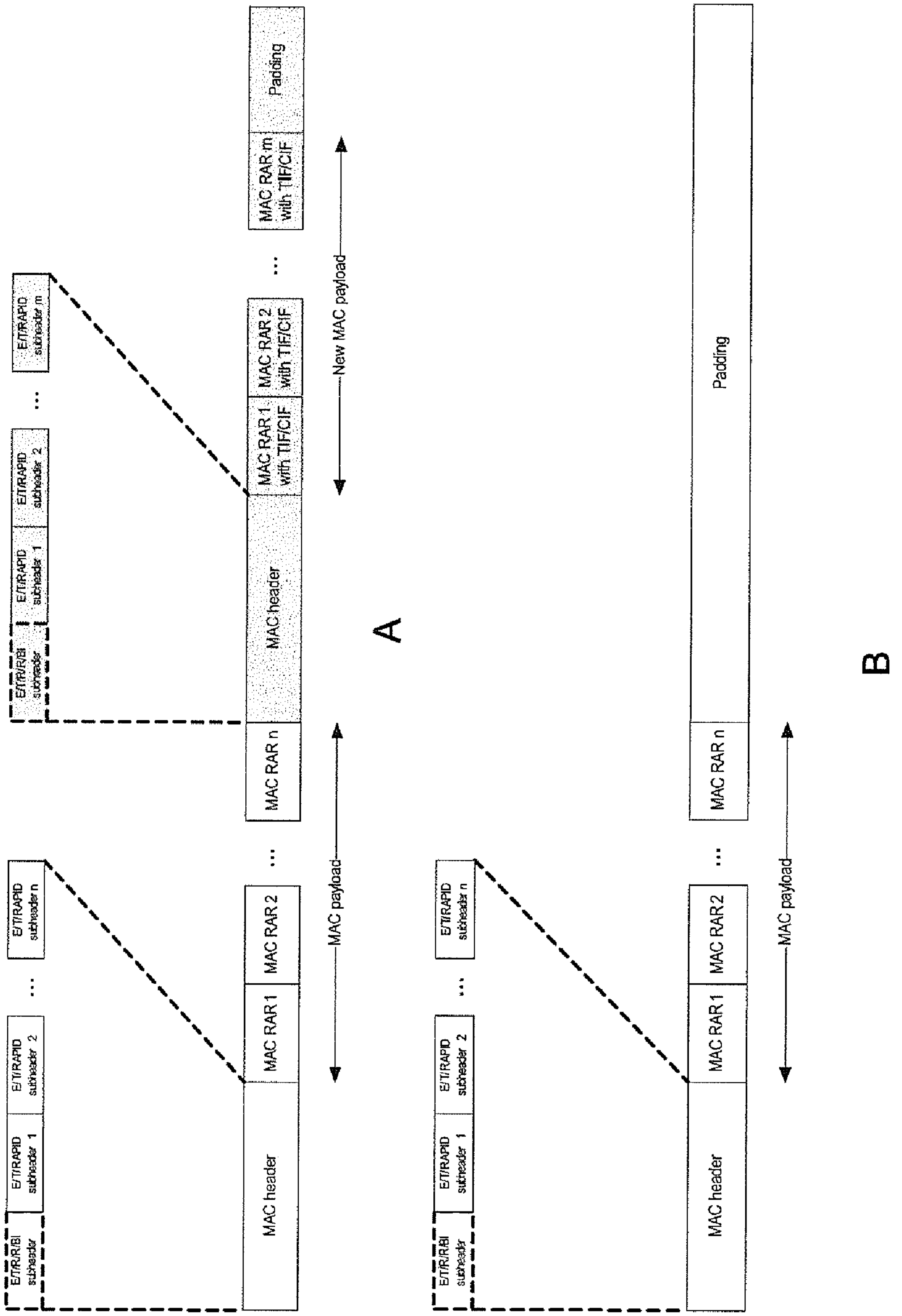
E/T/R/R/BI subheader
E/T/RAPID subheader 1
E/T/RAPID subheader 2
E/T/RAPID subheader n
MAC header
MAC RAR 1
MAC RAR 2
MAC RAR n
MAC payload
E/T/RAPID subheader m
MAC RAR 1 with TIF/CIF
MAC RAR 2 with TIF/CIF
MAC RAR m with TIF/CIF
Padding
New MAC payload
A
B

[Fig. 14]

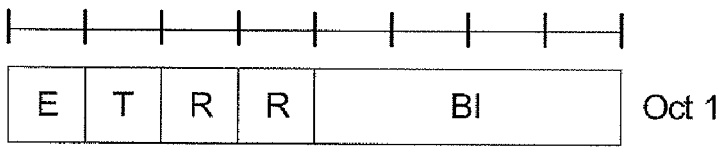


[Fig. 15]

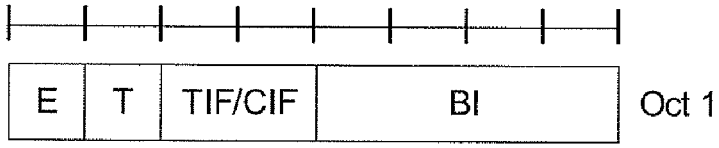

[Fig. 16]

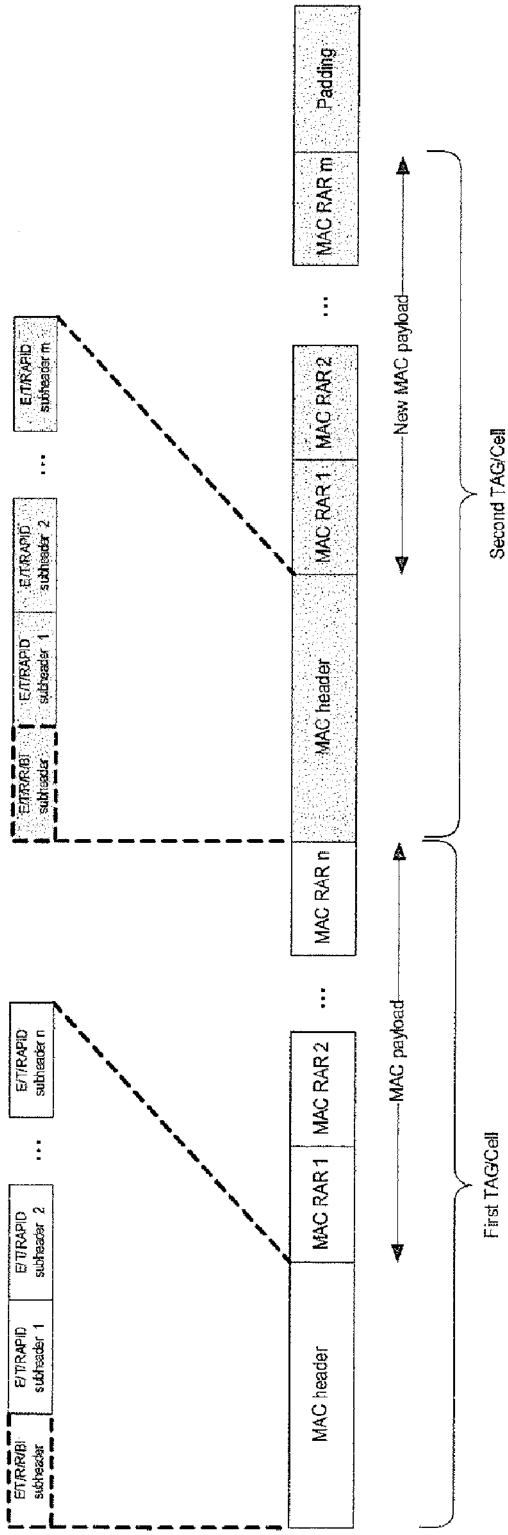
E/T/R/R/BI subheader
E/T/RAPID subheader 1
E/T/RAPID subheader 2
E/T/RAPID subheader n
MAC header
MAC RAR 1
MAC RAR 2
MAC RAR n
MAC payload
First TAG/Cell
E/T/R/R/BI subheader
E/T/RAPID subheader 1
E/T/RAPID subheader 2
E/T/RAPID subheader m
MAC header
MAC RAR 1
MAC RAR 2
MAC RAR m
Padding
New MAC payload
Second TAG/Cell

[Fig. 17]

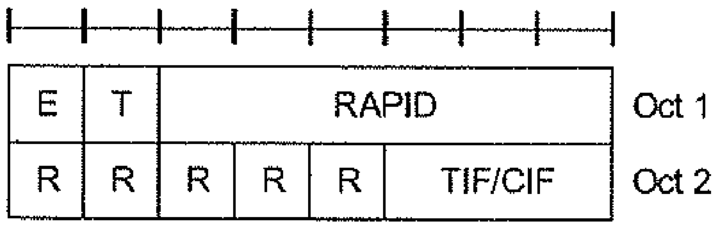

[Fig. 18]

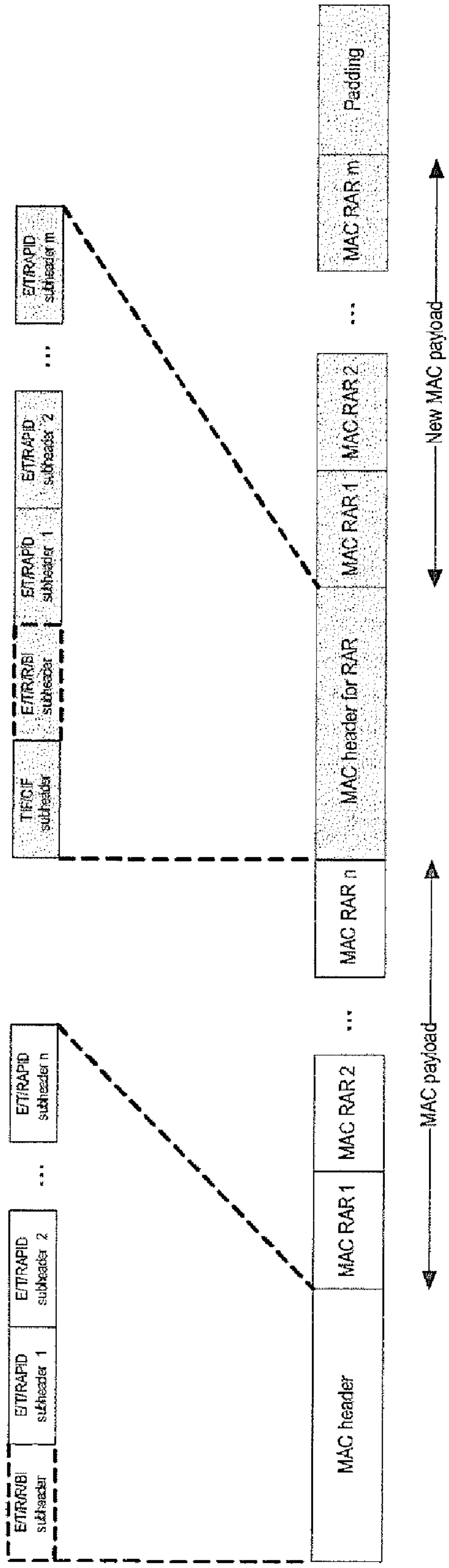
E/T/R/R/BI subheader
E/T/RAPID subheader 1
E/T/RAPID subheader 2
E/T/RAPID subheader n
MAC header
MAC RAR 1
MAC RAR 2
MAC RAR n
MAC payload
E/T/R/R/BI subheader
E/T/RAPID subheader 1
E/T/RAPID subheader 2
E/T/RAPID subheader m
MAC header for RAR
MAC RAR 1
MAC RAR 2
MAC RAR m
Padding
New MAC payload

[Fig. 19]

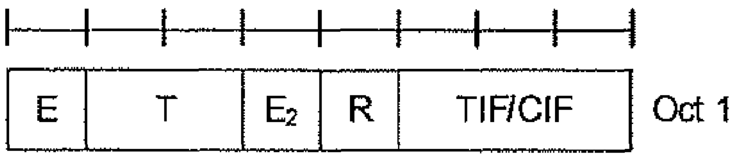


E:Extension field, indicates if more fields are present in the subheader, 0=Last subheader, 1=More subheaders exist

T: Type field, set to '01' for TIF/CIF subheader

$E_2$:Second extension field, 0=Last TIF/CIF subheader, 1=More TIF/CIF subheaders exist

R: Reserve field, set to '0'

TIF/CIF: TIF/CIF field

[Fig. 20]

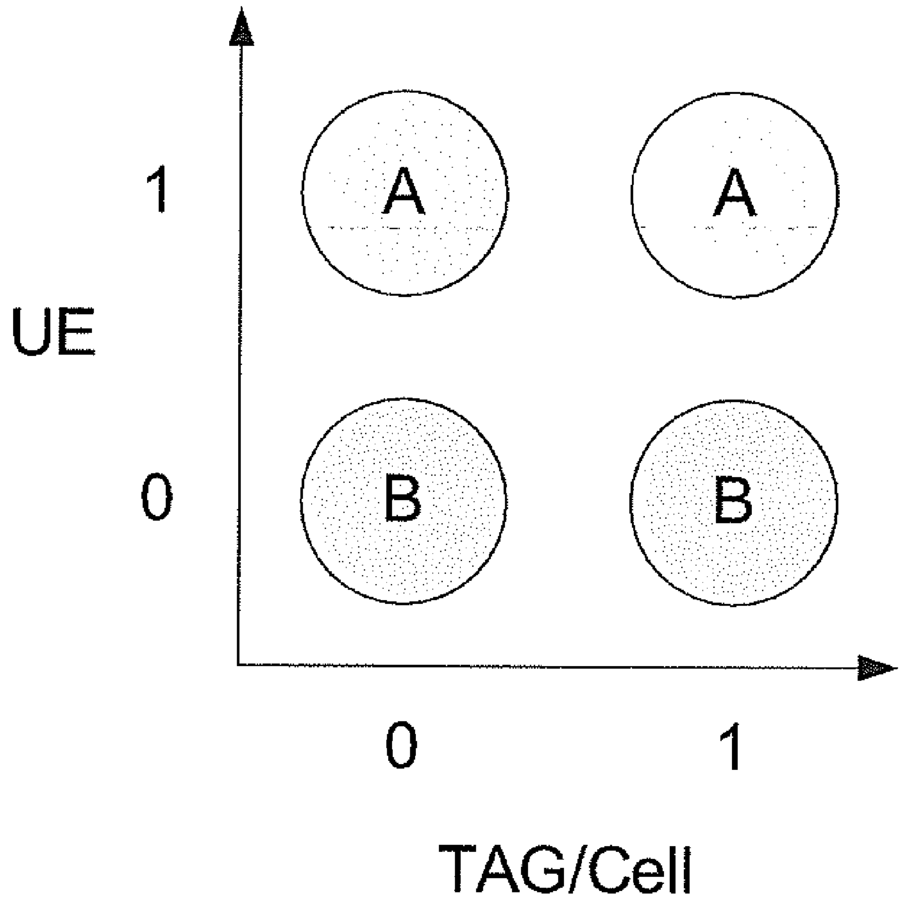

[Fig. 21]

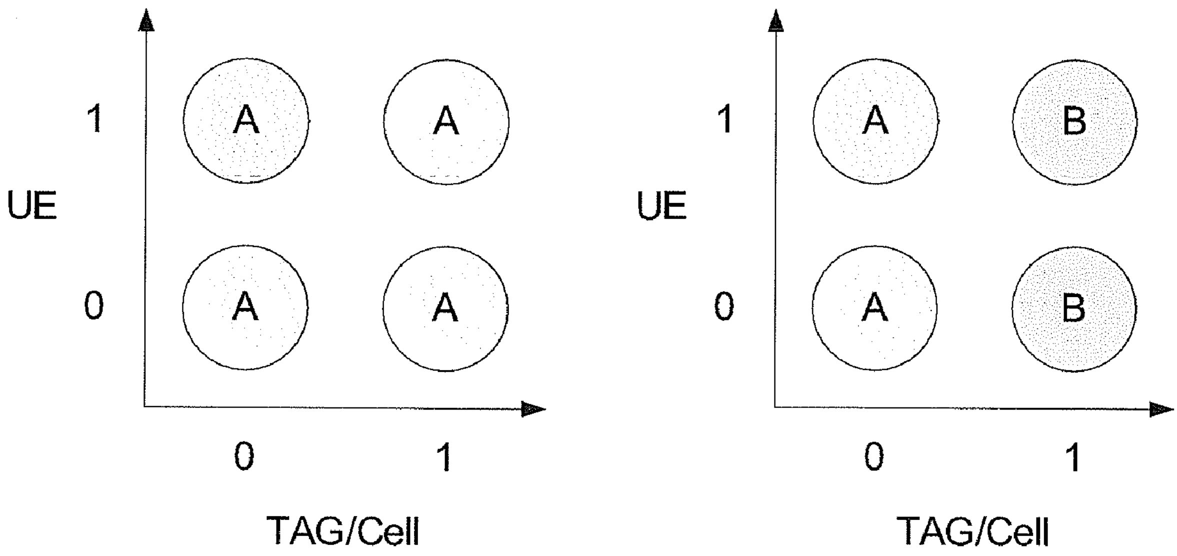
1
UE
0
A
A
A
A
0
1
TAG/Cell
1
UE
0
A
B
A
B
0
1
TAG/Cell

[Fig. 22]

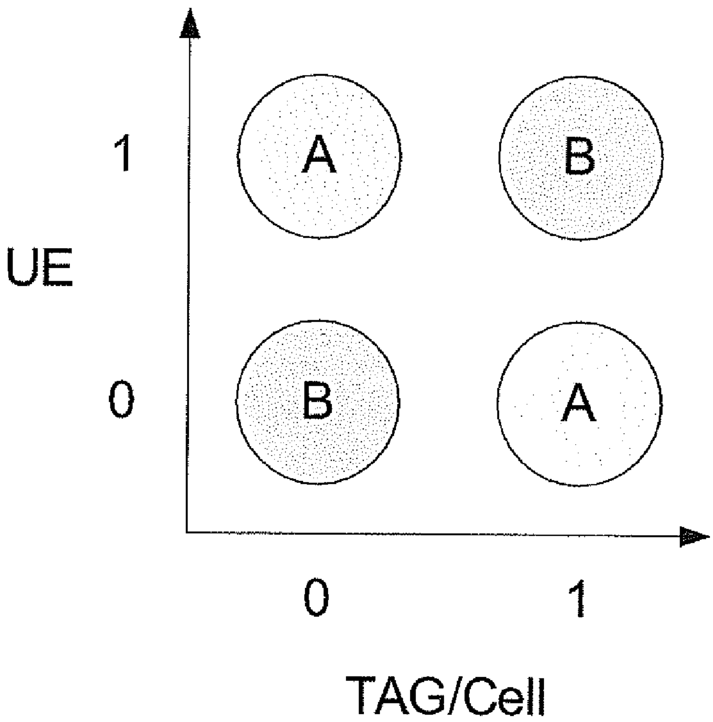
1
UE
0
A
B
B
A
0
1
TAG/Cell

[Fig. 23]

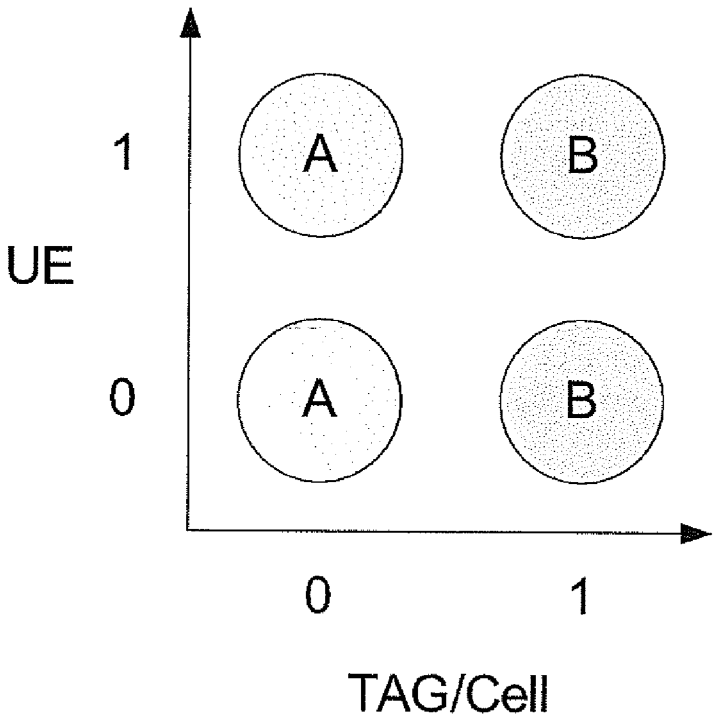

[Fig. 24]

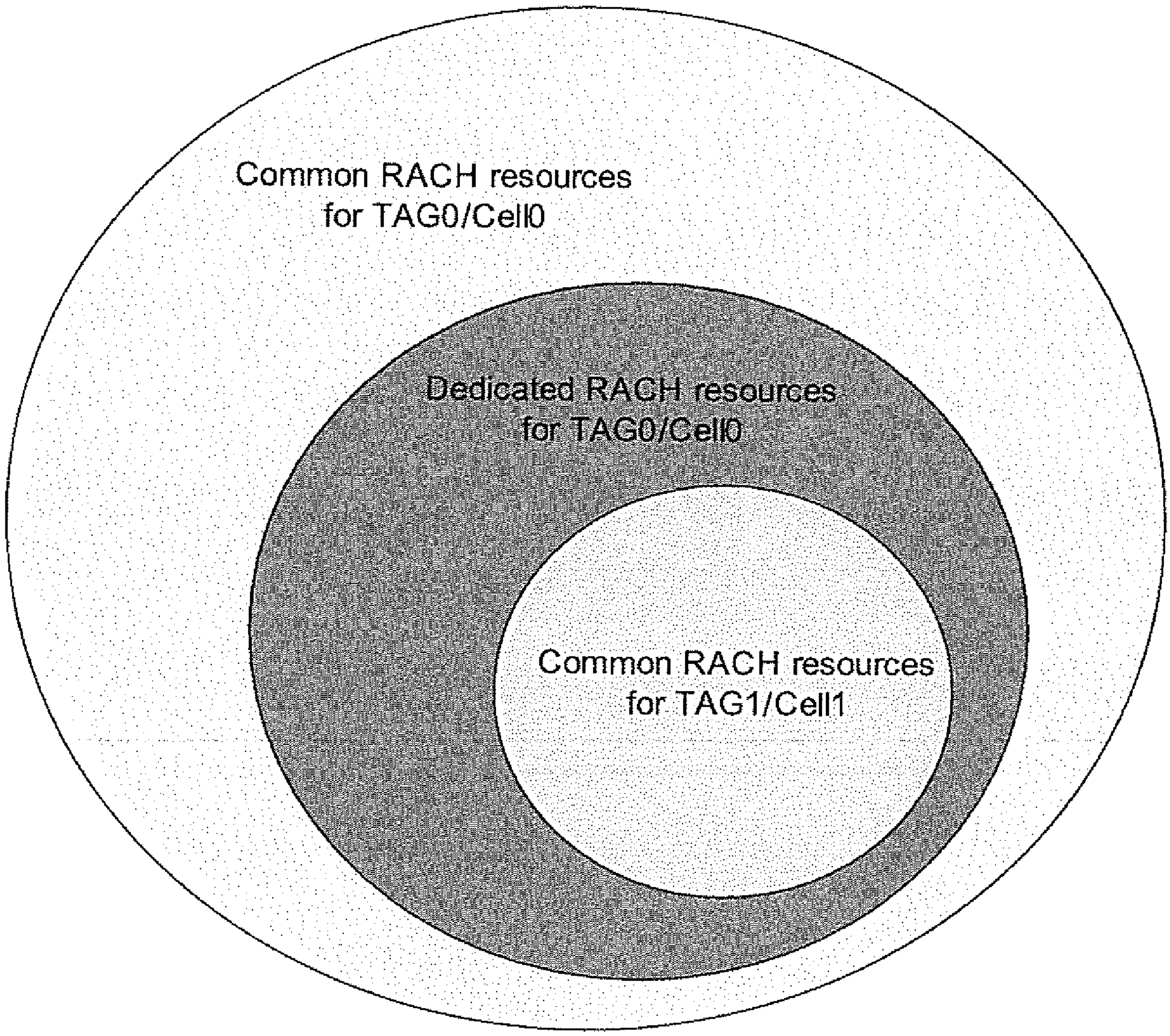
Common RACH resources
for TAG0/Cell0
Dedicated RACH resources
for TAG0/Cell0
Common RACH resources
for TAG1/Cell1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011019619 A
- US 2011103332 A


### Non-patent literature cited in the description


- **LTE.** *LTE Carrier Aggregation Enhancements*
- PDCCH order and RA selection. **FUJITSU.** 3GPP DRAFT; R2-103083, 3RD GENERATION PARTNERSHIP PROJECT (3GPP). MOBILE COMPETENCE CENTRE, 04 May 2010
- Miscellaneous corrections to TS36.321 on CA. **HUAWEI et al.** 3GPP DRAFT; R2-105599, 3RD GENERATION PARTNERSHIP PROJECT (3GPP). MOBILE COMPETENCE CENTRE, 04 October 2010
- CIF inclusion in PDCCH order. **FUJITSU.** 3GPP DRAFT; R2-103849, 3RD GENERATION PARTNERSHIP PROJECT (3GPP). MOBILE COMPETENCE CENTRE, 22 June 2010